(19) Europäisches Patentamt European Patent Office Office européen des brevets

(11) **EP 4 278 226 B1**

(12) **EUROPÄISCHE PATENTSCHRIFT**

(45) Veröffentlichungstag und Bekanntmachung des Hinweises auf die Patenterteilung:
**30.04.2025  Patentblatt 2025/18**

(21) Anmeldenummer: **22700621.0**

(22) Anmeldetag: **13.01.2022**

(51) Internationale Patentklassifikation (IPC):
**G02B 21/00** *(2006.01)*    **G02B 27/58** *(2006.01)*
**G01N 21/64** *(2006.01)*

(52) Gemeinsame Patentklassifikation (CPC):
**G02B 21/0076; G01N 21/6458; G02B 21/0072; G02B 21/008; G02B 27/58**

(86) Internationale Anmeldenummer:
**PCT/EP2022/050626**

(87) Internationale Veröffentlichungsnummer:
**WO 2022/152785 (21.07.2022 Gazette 2022/29)**

(54) **VERFAHREN UND VORRICHTUNG ZUR HOCHAUFGELÖSTEN ORTSBESTIMMUNG EINES EINZELNEN FARBSTOFFMOLEKÜLS IN MEHREREN RAUMRICHTUNGEN**

METHOD AND DEVICE FOR HIGH-RESOLUTION POSITION DETERMINATION OF AN INDIVIDUAL DYE MOLECULE IN A PLURALITY OF SPATIAL DIRECTIONS

PROCÉDÉ ET DISPOSITIF DE DÉTERMINATION DE POSITION HAUTE RÉSOLUTION D'UNE MOLÉCULE DE COLORANT INDIVIDUELLE DANS UNE PLURALITÉ DE DIRECTIONS SPATIALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2021  DE 102021100564**

(43) Veröffentlichungstag der Anmeldung:
**22.11.2023  Patentblatt 2023/47**

(73) Patentinhaber: **Abberior Instruments GmbH**
**37077 Göttingen (DE)**

(72) Erfinder: **SCHMIDT, Roman**
**37077 Göttingen (DE)**

(56) Entgegenhaltungen:
EP-A1- 3 951 470        EP-A1- 4 067 878
EP-A1- 4 095 583        EP-A1- 4 193 209
WO-A1-2020/128106    US-A1- 2020 393 378

- CHIU CHI-LI ET AL: "Axial super resolution topography of focal adhesion by confocal microscopy : Axial Super Resolution Topography", MICROSCOPY RESEARCH AND TECHNIQUE., vol. 76, no. 10, 29 July 2013 (2013-07-29), GB, pages 1070 - 1078, XP055915860, ISSN: 1059-910X, DOI: 10.1002/ jemt.22267
- PAPE JASMIN KATHRIN: "Multicolor 3D Minflux Nanoscopy for Biological Imaging", 12 November 2020 (2020-11-12), XP055915858, Retrieved from the Internet <URL:https://ediss. uni-goettingen.de/bitstream/handle/21.11130/ 00-1735-0000-0005-14E6-1/ PhDThesisJasminPape_forPublication_final. pdf?sequence=1&isAllowed=y>
- GWOSCH KLAUS C ET AL: "MINFLUX nanoscopy delivers 3D multicolor nanometer resolution in cells", NATURE METHODS, NATURE PUBLISHING GROUP US, NEW YORK, vol. 17, no. 2, 13 January 2020 (2020-01-13), pages 217 - 224, XP037006746, ISSN: 1548-7091, [retrieved on 20200113], DOI: 10.1038/ S41592-019-0688-0

**Beschreibung**

## TECHNISCHES GEBIET DER ERFINDUNG

Die Erfindung bezieht sich auf die MINFLUX-Nanoskopie. Die Erfindung verbessert die dreidimensionale Lokalisation vereinzelter Fluorophore.

## STAND DER TECHNIK

Ein im Stand der Technik noch junges Mikroskopieverfahren ist die MINFLUX-Nanoskopie. Bei der MINFLUX-Nanoskopie handelt es sich um Verfahren der Lokalisationsmikroskopie. Die Lokalisation der Fluorophore erfolgt mittels strukturierter Anregungslichtverteilungen. Eine grundlegende Besonderheit der MINFLUX-Nanoskopie ist, dass die Anregung der Fluorophore jeweils so erfolgt, dass ein zu lokalisierendes Fluorophor immer nah an einem oder in einem Minimum der Anregungslichtverteilung, welches idealerweise eine Nullstelle ist, platziert ist, wobei die Anregungslichtverteilung benachbart zum Minimum einen Intensitätsanstiegsbereich aufweist. Hierdurch wird eine besonders gute Ausnutzung der Fluoreszenzphotonen hinsichtlich der Gewinnung von Information über die Lage des jeweiligen emittierenden Fluorophors erreicht. Dies gilt auch für Anwendungen, in denen die Bewegung von Fluorophoren über die Zeit verfolgt werden soll. Die Beobachtung einer Probe unter Nutzung eines Anregungsminimums, einer Grundlage der MINFLUX-Nanoskopie, ist beispielsweise bekannt aus den Patenten DE 10 2011 055 367 B4, hier zunächst nur zur Verfolgung der Bewegung einzelner Moleküle in einer Probe, EP 3 055 674 B1 und DE 10 2013 114 860 B3. Im Patent EP 3 055 674 B1 wird vorgeschlagen, für das Verfolgen eines Partikels in einer Probe in mehreren Raumrichtungen im Wechsel verschiedene Anregungslichtverteilungen zu nutzen, mit denen jeweils das Partikel in zueinander orthogonalen Richtungen verfolgt wird.

Auf Basis dieser Grundlage sind eine Reihe von Verfeinerungen zur Informationsgewinnung entstanden, die eine Lokalisation der Fluorophore mit einer Unsicherheit im Bereich unterhalb von 2 nm ermöglichen. Diese Größe der Unsicherheit entspricht der Ausdehnung von Fluorophoren. Eine ausführliche Darstellung zur MINFLUX-Nanoskopie findet sich in "Nanometer resolution imaging and tracking of fluorescent molecules with minimal photon fluxes", Francisco Balzarotti et. al., arXiv:1611.03401 [physics.optics] (2016). Experimentell gezeigt wird eine nicht-iterative MINFLUX-Lokalisation sowie ein Verfolgen von vereinzelten Fluorophoren mittels MINFLUX. Zudem wird das Konzept des iteratives MINFLUX vorgestellt. Grundsätzlich muss, um ein Fluorophor mittels MINFLUX-Nanoskopie lokalisieren zu können, das Intensitätsminimum bzw. die Intensitätsnullstelle an einer Mehrzahl von Positionen relativ zur Lage des Fluorophors platziert werden. Hierfür muss in einem vorbereitenden Schritt eine Position des Fluorophors mit einer ersten, geringeren Genauigkeit abgeschätzt werden oder bekannt sein. Dies kann beispielsweise mittels gewöhnlicher Lokalisationsmikroskopie (PALM, STORM) geschehen oder mittels anderer bekannter Verfahren. In der genannten Publikation wird hierfür ein Verfahren beschrieben, bei dem eine Probe mit einer Gauß'schen Intensitätsverteilung abgetastet wird, bis an einer Abtastposition Fluoreszenz detektiert wird, die mit gewisser Wahrscheinlichkeit von einem vereinzelten Molekül stammt. Die Abtastung wird dann gestoppt, und die Intensitätsverteilung wird anschließend an vier Orten im Abstand von weniger als der Wellenlänge des Lichts zur Abtastposition um diese herum positioniert. Aus den zu jeweils zwei einzelnen bezüglich der Abtastposition einander gegenüberliegenden Positionen gemessenen Photonenzahlen wird die Lage des vereinzelten Emitters jeweils bezüglich der Richtung der Verbindungsgeraden nach einem in der Publikation beschriebenen Verfahren abgeschätzt, sodass insgesamt die Emitterlage in beiden Raumrichtungen senkrecht zur optischen Achse bestimmt wird. Dieses Verfahren zur Vorlokalisation wird zwar im Zusammenhang mit dem folgenden Verfolgen der Bewegung eines Fluorophors beschrieben, kann aber ebenso auch im Zusammenhang mit einer Lokalisation genutzt werden. Die Abschätzung je Richtung entspricht im Kern einer ratiometrischen Auswertung der Photonenzahlen. Anschließend wird eine Intensitätsverteilung von Anregungslicht mit einem zentralen Minimum, beispielsweise in der Form eines Donuts, wie aus der STED-Mikroskopie bekannt, an einer bekannten Position platziert, die derart gewählt ist, dass die abgeschätzte Lage des Fluorophors nah am Minimum der Intensitätsverteilung ist. Die Fluoreszenzantwort des Fluorophors wird gemessen. Dasselbe wird für eine oder mehrere weitere Positionen der Intensitätsverteilung wiederholt. Mittels einer ratiometrischen Auswertung der Intensitätsverhältnisse wird die Lage des Fluorophors mit höherer Genauigkeit bestimmt. Grundsätzlich steigt die Emissionsrate, je weiter das Fluorophor vom Anregungsminimum entfernt ist bzw. je weiter das Fluorophor in einen Intensitätsanstiegsbereich hinein verschoben ist. Diese genauer bestimmte Lage kann nun als Ausgangsposition für eine Wiederholung der Abfolge der vorgenannten Schritte verwendet werden, wobei die Positionen des Minimums der Intensitätsverteilung von Anregungslicht dichter an die abgeschätzte Lage des Fluorophors gelegt werden können. Je näher die Minimumspositionen der Intensitätsverteilung jeweils am tatsächlichen Ort des Fluorophors liegen, umso weniger Fluoreszenzphotonen werden für eine Lokalisation mit einer vorgegebenen Unsicherheit bzw. Genauigkeit benötigt. In der Publikation wird darauf hingewiesen, dass eine Lokalisation in zwei Dimensionen erfolgen könne, indem mit einem eindimensionalen Profil zunächst in einer Richtung eine Lokalisation durchgeführt werde und anschließend mit demselben Profil, aber nach einer Drehung, eine Lokalisation in einer anderen Richtung durchgeführt werde. Weiter wird darauf hingewiesen, dass zukünftige Arbeiten sich auf eine Lokalisation in drei Dimensionen unter Verwendung von z-Donuts richten würden.

Als Patentoffenlegungsschriften zur MINFLUX-Mikroskopie sind insbesondere die Schriften WO 2018/069 283 A1, US 2019/0235220 A1, US 2019/0234882 A1 und US 2019/0234879 A1 zu nennen, wobei die genannten US-Patentanmeldungen alle Folgeanmeldungen zu der zuerst genannten vorläufigen internationalen Patentanmeldung sind, in der alle in der Folge mit Bezug zu den US-Offenlegungsschriften genannten Konzepte ebenfalls offenbart sind.

Die US 2019/0235220 A1 richtet sich auf ein Verfahren mit einer geringen oder minimalen Anzahl von Positionen, an denen ein Intensitätsminimum eines Anregungsintensitätsprofils, welches in jeder Raumrichtung, in der eine Lage des Fluorophors bestimmt werden soll, beiderseits von Intensitätsanstiegsbereichen benachbart ist, platziert wird, um die Lage des Fluorophors zu bestimmen.

Die US 2019/0234882 A1 richtet sich auf das weiter oberhalb beschriebene Verfahren, bei dem die aus einem ersten MINFLUX-Schritt gewonnene Ortsinformation genutzt wird, um in einem Folgeschritt das Minimum der Intensitätslichtverteilung jeweils näher an dem Fluorophor zu platzieren und hieraus genauere Ortsinformation abzuleiten.

Die US 2019/0234879 A1 richtet sich auf ein Verfahren, bei dem das Intensitätsminimum eines Anregungsintensitätsprofils sehr schnell, quasi gleichzeitig, an einer Mehrzahl von Positionen um die abgeschätzte Lage des Fluorophors herum platziert wird. Eine einzelne Position wird dann näher an das vermutete Minimum herangeschoben, wenn an ihr eine erhöhte Emissionsrate festgestellt wird.

Gemäß WO 2018/069 283 A1 kann eine Lokalisation in mehreren Raumrichtungen erfolgen, indem irgendeines der erfindungsgemäßen Verfahren sequenziell für verschiedene Orientierungen durchgeführt wird, beispielsweise mittels eines eindimensionalen Anregungsintensitätsprofils zunächst in einer ersten Richtung und anschließend in einer von der ersten Richtung verschiedenen Richtung.

In der Publikation "MINFLUX nanoscopy delivers 3D multicolor nanometer resolution in cells", Klaus C. Gwosch et. al., Nat Methods 17, 217-224 (2020). https://doi.org/10.1038/s41592-019-0688-0, (zusammen mit der zugehörigen "Supplementary information") wird eine konkrete Realisierung einer dreidimensionalen Lokalisation mittels MINFLUX beschrieben. In einem Teilbereich einer Probe wird mittels fokussierten Aktivierungslichts ein vereinzeltes Fluorophor in einen anregbaren Zustand versetzt. Dieses Fluorophor wird in einem ersten Schritt mittels fokussierten Anregungslichts, wobei die Intensitätsverteilung im Fokus im Wesentlichen einer Gaußverteilung entspricht, lokalisiert, indem der Fokus des Anregungslichts an vier Positionen um die Position des Aktivierungsfokus platziert wird. Aus den jeweils gemessenen Fluoreszenzsignalen zu zwei gegenüberliegenden Positionen wird jeweils eine Ortskoordinate der Fluorophorposition in Richtung der Verbindungsgeraden der beiden Positionen bestimmt, sodass insgesamt eine laterale Lage bestimmt wird. Anschließend wird die Probe in einem zweiten Schritt mit fokussiertem Anregungslicht beaufschlagt, wobei der Fokus die Form eines 3D-Donuts hat, das heißt, wobei die Intensitätsverteilung ein lokales Minimum aufweist, das in allen drei Raumrichtungen von Intensitätsanstiegsbereichen umgeben ist. Der 3D-Donut wird hierbei nacheinander an insgesamt zwei Positionen platziert, wobei das lokale Intensitätsminimum sich in lateraler Richtung jeweils an der im ersten Schritt bestimmten Position befindet. In axialer Richtung wird das lokale Minimum dabei einmal entlang der optischen Achse oberhalb und einmal unterhalb der erwarteten (Englisch: "the 3D donut is targeted in two positions above and below the anticipated fluorophore position") Fluorophorlage platziert. An diese Vorlokalisation schließt sich eine genauere Lokalisation an, wobei ein Abtastmuster mit sieben Positionen, von denen fünf in einer Abtastmuster-Ebene liegen, von denen wiederum eine im Zentrum der Abtastmuster-Ebene liegt und vier gleichmäßig verteilt auf einem Kreis um die zentrale Position herum liegen, verwendet wird. Das Abtastmuster weist zwei weitere Positionen auf, die gemeinsam mit der zentralen Position der Abtastmuster-Ebene auf einer Abtastmuster-Achse liegen, sodass insgesamt drei Positionen auf der Abtastmuster-Achse liegen. Der 3D-Donut wird nun sequenziell an die sieben Positionen des Abtastmusters platziert, wobei die zentrale Position des Abtastmusters an die bei der Vorlokalisation bestimmten Lage des Fluorophors platziert wird. An diese Lokalisation schließt sich eine weitere Lokalisation an, bei der bei der ein verkleinertes, ansonsten aber identisches Abtastmuster verwendet wird. Dies kann iterativ fortgesetzt werden, bis das Fluorophor seine Fluoreszenzfähigkeit verliert.

In der Publikation "Multicolor 3D MINFLUX nanoscopy of mitochondrial MICOS proteins", Jasmin K. Pape et al., PNAS August 25, 2020 117 (34) 20607-20614, 2020 https://doi.org/ 10.1073/pnas.2009364117, wird eine weitere Anwendung des in der Publikation "MINFLUX nanoscopy delivers 3D multicolor nanometer resolution in cells" vorgestellten Verfahrens beschrieben.

Während bei bildbasierten Lokalisationsverfahren wie PALM oder STORM, bei denen Beugungsbilder vereinzelter Fluorophore aufgezeichnet werden, aus denen dann die Lage des Fluorophors bestimmt wird, die Auflösung im Wesentlichen einerseits proportional zur Wellenlänge des verwendeten Lichts ist und andererseits umgekehrt proportional zu der Wurzel der Anzahl der detektierten Photonen ist, hängt die Auflösung bei einem iterativen MINFLUX-Verfahren von der genauen Art der Iteration ab. Dies gilt sowohl für eine Lokalisation in zwei Dimensionen als auch für eine Lokalisation in drei Dimensionen. Dies ist deswegen so, weil die Unsicherheit, mit der die Position eines Fluorophors in einem gegebenen Iterationsschritt, das heißt bei einer gegebenen Ausdehnung des Abtastmusters, eben von der Ausdehnung des Abtastmusters abhängt. Hierbei ist zu beachten, dass eine Lokalisation nur dann gelingt, wenn der Abstand der tatsächlichen Lage des Fluorophors zu der zentralen Position im Verhältnis zu der Ausdehnung des Abtastmusters nicht zu groß ist.

Die Publikation "Axial Super Resolution Topography of Focal Adhesion by Confocal Microscopy" von C-L. Chiu und E. Gratton (2013, Microsc Res Tech 76(10), 1-16) beschreibt ein Verfahren zur axialen Positionsbestimmung von Fluorophoren, bei dem die Probe an verschiedenen axialen Positionen mit einem Gauß-förmigen Anregungslichtfokus gescannt wird, wobei die Fluoreszenz detektiert wird, und die Fluoreszenzdaten mit einer Phasorplot-Analyse ausgewertet werden, um die axiale Position zu erhalten.

In der WO 2020/128106 A1 ist ein Verfahren zur punktförmigen Beleuchtung in einem Mikroskop beschrieben, wobei die Probe sequentiell an Beleuchtungspunkten eines vordefinierten oder vordefinierbaren Beleuchtungspunktmusters beleuchtet wird, insbesondere mit einer Intensitätsverteilung mit einem zentralen lokalen Minimum. Dabei können für eine axiale Positionsbestimmung insbesondere Beleuchtungspunktmuster verwendet werden, bei denen die Abstände in axialer Richtung in der Größenordnung $\lambda$/NA bzw. $\lambda$/2NA liegen, wobei $\lambda$ die Wellenlänge des Anregungslichts ist und NA die numerische Apertur bezeichnet.

Die US 2020/0393378 A1 beschreibt ein Verfahren, bei dem an Positionierhilfen vorbekannter Position gekoppelte Probenstrukturen mit fluoreszenten Farbstoffen markiert werden, und wobei die Farbstoffe durch Abtasten mit einer Anregungslicht-Intensitätsverteilung mit einem zentralen lokalen Minimum in der Nähe der vorbekannten Positionen der Positionierhilfen und Erfassen des jeweiligen Fluoreszenzlichts einzeln lokalisiert werden. Dabei können insbesondere STED- und MINFLUX-Verfahren alternierend angewendet werden.

In der oben genannten Publikation "Nanometer resolution imaging and tracking of fluorescent molecules with minimal photon fluxes" wird dargelegt, dass die kleinste Unsicherheit der zweidimensionalen Ortsbestimmung, die bei Verwendung eines Abtastmusters mit insgesamt vier Abtastmuster-Positionen, von denen drei auf einem Kreis und eine im Zentrum des Kreises liegen, bei Abtastung mit einem 2D-Anregungsdonut erreicht werden kann, proportional zum Durchmesser L des Abtastmusters ist und im Übrigen umgekehrt proportional zu der Wurzel der Anzahl der detektierten Photonen ist. Dies führt dazu, dass es das Ziel sein muss, iterativ kleine Durchmesser des Abtastmusters zu erreichen, wobei darauf zu achten ist, dass jeweils der Durchmesser des Abtastmusters in einem Folgeschritt ausreichend groß sein muss, um sicherzustellen, dass der Abstand der tatsächlichen Lage des Fluorophors zu der im vorangehenden Iterationsschritt bestimmten Position nicht zu groß ist im Verhältnis zu der Ausdehnung dieses Abtastmusters, da sonst die Lokalisation in diesem Folgeschritt nicht gelingt. Eine ideale Ausnutzung der Information gelingt unter Anwendung einer Maximum-likelihood-Abschätzung. Dies setzt allerdings voraus, dass die Intensitätsprofile des Anregungsdonuts und beispielsweise die Menge an Hintergrundfluoreszenz gut bekannt sind. Außerdem sind Lokalisationen mittels Maximum-likelihood-Methoden zeitaufwendig und daher für eine iterative Anwendung nicht geeignet, da die Verkleinerung des Abtastmusters und die Verschiebung des Musters an den in einem Schritt abgeschätzten Ort möglichst schnell erfolgen muss. In der praktischen Anwendung wird daher gemäß Stand der Technik ein sogenannter modified least mean squared estimator (mLMSE) der Form

$$\hat{\vec{r}}_{\mathrm{mLMS}}^{(k)}(\hat{p},\vec{\beta}) = -\frac{1}{1-\frac{L^2\ln(2)}{\mathrm{fwhm}^2}}\left(\sum_{j=0}^{k}\beta_j\hat{p}_0^j\right)\sum_{i=1}^{3}\hat{p}_i\cdot\bar{r}_{\mathrm{b}_i}\,,$$

verwendet (in Gleichung S50 der Publikation und allen auf dieser Gleichung basierenden heißt es irrtümlich "log (2)" ohne Angabe einer Basis anstelle von "ln (2)"), wobei die $\hat{p}_i$ jeweils auf die Gesamtanzahl detektierter Photonen normierte Photonenanzahlen an der Position $\vec{r}_{\mathrm{b}i}$ sind. Mit fwhm ist die volle Halbwertsbreite des Bereichs um das lokale Minimum des Anregungsdonuts bezeichnet, k ist eine Ordnung des Schätzers, deren Wahl den Bereich beeinflusst, in dem eine Lokalisation möglich ist, und $\beta_j$ ist ein skalarer Parameter, der insbesondere abhängig vom erwarteten Signal-zu-Rausch-Verhältnis zu wählen ist, um Lokalisationen zu erhalten, die eine möglichst geringe systematische Verschiebung aufweisen.

Dieser in der Praxis angewendete Schätzer wurde auf Basis eines sogenannten linearized least mean squared (LMS) estimator,

$$\hat{\vec{r}}_{\mathrm{LMS}}(\hat{p}) = -\frac{1}{1-\frac{L^2\ln(2)}{\mathrm{fwhm}^2}}\sum_{i=1}^{3}\hat{p}_i\cdot\bar{r}_{\mathrm{b}_i}$$

entwickelt, der wiederum durch eine Linearisierung der Lösung einer Maximum-likelihood-Bestimmung abgeleitet ist. Der LMS-Schätzer hat gemäß Angaben in "MINFLUX nanoscopy delivers 3D multicolor nanometer resolution in cells" den Nachteil, dass die im Zentrum des Abtastmusters gemessene Photonenanzahl nicht in die Ortsbestimmung eingeht.

Dieser Nachteil sei ein entscheidender Nachteil, weil zwar der im Zentrum gemessene Wert keine unmittelbare Information über die Richtung einer Lage des Fluorophors in einer Ebene, wohl aber Information über den Abstand der Lage des Fluorophors vom Zentrum enthalte. Das Ziel der Entwicklung des mLMSE war dementsprechend, die Information aus der Messung im Zentrum nutzbar zu machen. Dies sei wichtig, da hierdurch andernfalls bestehende Uneindeutigkeiten der Lokalisation durch die Messung im Zentrum vermieden werden. Solche Uneindeutigkeiten bestehen, wenn kein im Zentrum erhaltener Messwert ausgewertet wird, insofern, dass in bestimmten Situationen anhand der Messung nicht entschieden werden kann, ob sich ein Fluorophor innerhalb des Kreises der äußeren Positionen des Abtastmusters oder aber außerhalb befindet.

Der mLMSE weist grundsätzlich zwar einen Bias auf, das heißt, die mittels des mLMSE bestimmten Lagen des Fluorophors sind bzgl. der tatsächlichen Lagen systematisch verschoben, dieser Bias wird aber minimiert, indem abhängig von Annahmen über die Hintergrundfluoreszenz und abhängig von der gewählten Ordnung des Schätzers die Parameter $\beta_j$ optimal gewählt werden. Dieser Schätzer kann als Schätzer grundsätzlich nur angewendet werden, wenn das Abtastmuster eine Position im Zentrum aufweist, an der auch tatsächlich eine Abtastung erfolgt. Denn auf der Messung der Photonenanzahl im Zentrum des Abtastmusters beruht der Term $\sum_{j=0}^{k} \beta_j \hat{p}_0^{\,j}$, der für eine passende Skalierung des Schätzers zur Minimierung des Bias sorgt. Zwar ist es möglich und auch üblich, nach Abschluss der Messungen die Daten weiter zu analysieren, um gegenüber der während der Messungen erhaltenen Abschätzungen verbesserte Abschätzungen der Lagen aller auf die oben beschriebene Weise lokalisierten Fluorophore zu erhalten, die daraus zu erhaltene Qualität der Analyse hängt aber dennoch kritisch von der Qualität der während der Messungen erhaltenen Abschätzungen ab, da diese die Grundlage für den Iterationsprozess und damit für den kleinstmöglichen Durchmesser des Abtastmusters sowie für die unter Anwendung dieses kleinsten Abtastmusters messbare Anzahl von Photonen bilden.

Das in "MINFLUX nanoscopy delivers 3D multicolor nanometer resolution in cells" und der zugehörigen "Supplementary Information" beschriebene Verfahren baut nun unmittelbar auf dem oberhalb referierten Verfahren und den theoretischen Arbeiten zu diesem Verfahren auf. Für die Abschätzung der Lage des Fluorophors während der Messung mit einem 3D-Donut wird der mLMSE in der verallgemeinerten Form

$$\hat{\bar{r}}_{\mathrm{mLMS}}^{(k)}\left(\hat{\bar{p}}, \bar{\beta}\right) = -\frac{1}{1 - \dfrac{L^2 \ln(2)}{\mathrm{fwhm}^2}}\left(\sum_{j=0}^{k} \beta_j \hat{p}_0^{\,j}\right)\sum_{i=0}^{m-1} \hat{p}_i \cdot \bar{r}_{\mathrm{b}_i}\,,$$

verwendet (wobei im rechten Summanden der Wert zum Index i=0 keinen Beitrag liefert). Für die konkret dargestellten Messungen wurde die Ordnung k=1 gewählt, sodass insgesamt für die Messung, wie oben referiert (vier Positionen auf einem Kreis und drei auf der Achse), der Schätzer die Form

$$\hat{\bar{r}}_{\mathrm{mLMS}}^{(k)}\left(\hat{\bar{p}}, \bar{\beta}\right) = -\frac{1}{1 - \dfrac{L^2 \ln(2)}{\mathrm{fwhm}^2}}\left(\sum_{j=0}^{1} \beta_j \hat{p}_0^{\,j}\right)\sum_{i=0}^{6} \hat{p}_i \cdot \bar{r}_{\mathrm{b}_i}\,,$$

**annimmt.** Hierbei werden die Parameter $\beta_j$, die jeweils skalare Werte sind, numerisch optimiert für ein typisches Signal-zu-Rausch-Verhältnis, wobei die Form des 3D-Donuts durch eine quadratische Funktion approximiert wird, das heißt, wobei ein mit dem Abstand zum zentralen Intensitätsminimum des 3D-Anregungsdonuts quadratischer Anstieg der Intensität angenommen wird. Optimale Parameter für eine iterative MINFLUX-Lokalisation, das heißt, die Anzahl der Iterationsstufen, die Durchmesser der Abtastmuster L zu jeder der Abtaststufen und die Photonenanzahlen N zu jeder der Abtaststufen werden aus einer Simulation, ausgehend von der Annahme, dass ein Fluorophor innerhalb des Aktivierungsvolumens mit einem Durchmesser von 360 nm gelegen ist, bestimmt, die auch die finale Lokalisation mittels einer Maximum-likelihood-Abschätzung umfasst. Im Rahmen dieser Simulation wurde auch die Variation sowohl eines Gauß'schen Anregungsspots als auch eines 2D-Donuts in axialer Richtung berücksichtigt, wobei unklar ist, ob die Eigenschaften einer 3D-Lokalisation mittels eines 2D-Donuts untersucht wurden.

Mittels MINFLUX-Nanoskopie konnte die Position von Fluorophoren in drei Raumrichtungen experimentell mit einer Unsicherheit von wenigen Nanometern bestimmt werden, das heißt die Genauigkeit der Lagebestimmung ist vergleichbar mit der Ausdehnung der Fluorophore selbst. Soll die Lage eines einzelnen Fluorophors mit einer gegeben Messunsicherheit bestimmt werden, so wird hierfür eine geringere Zeit und insbesondere eine geringere Anzahl von Fluoreszenzphotonen benötigt als bei einer Lagebestimmung eines einzelnen Fluorophors mittels herkömmlicher Lokalisationsmikroskopie. Eine Lokalisation einzelner Fluorophore in drei Raumrichtungen nach einem MINFLUX-Verfahren ist im Stand der Technik konkret nur gezeigt für eine unmittelbare Kopplung der Lokalisation an eine Aktivierung des zu lokalisierenden Fluorophors. Hierbei ist aufgrund der lokalen Aktivierung die axiale Position des zu lokalisierenden Fluorophors vielfach ausreichend gut bekannt, um unter Anwendung eines z-Donuts von Anregungslicht, der einmal oberhalb dieser axialen Position und einmal unterhalb platziert wird, die axiale Lage genauer abzuschätzen. Ist die axiale Lage des vereinzelten Fluorophors aus der Aktivierung nicht ausreichend genau bekannt, wird das im Stand der Technik beschriebene Verfahren scheitern. Es ist grundsätzlich nicht anwendbar, wenn vereinzelte Fluorophore lokalisiert werden sollen, ohne dass diese explizit unmittelbar vor dem Lokalisieren aktiviert werden. Weiter weist das aus dem Stand der Technik bekannte Verfahren die Schwäche auf, dass die Güte der zeitlich während der Messungen erhaltenen Abschätzungen der Lage nicht nur durch das Hintergrundsignal als solches gemindert ist, sondern bei gegenüber den bei der Optimierung der Parameter $\beta_j$ verwendeten Annahmen über das Hintergrundsignal abweichendem Hintergrundsignal systematisch weiter gemindert ist.

Eine weitere entscheidende Schwäche des bekannten Verfahrens zur 3D-MINFLUX-Nanoskopie ergibt sich daraus, dass die Echtzeitabschätzung der Lage eines Fluorophors auf der Approximation der Form eines 3D-Anregungsdonuts durch eine quadratische Funktion sowie auf einer gekoppelten Abschätzung sowohl der axialen als auch der lateralen Lage basiert. Da diese Näherung allenfalls für sehr kleine Abstände zum zentralen Minimum eine gute Näherung ist, führt diese Annahme in Verbindung mit der Nutzung des bekannten Schätzers vor allem in frühen Schritten einer MINFLUX-Iteration, bei Nutzung von Abtastmustern mit großen Durchmessern, zu einer geminderten Ausnutzung der in der Fluoreszenz vorhandenen Information.

## AUFGABE DER ERFINDUNG

Der Erfindung liegt die Aufgabe zugrunde, verbesserte MINFLUX-Verfahren zur Lokalisation vereinzelter Fluorophore in dreidimensional ausgedehnten Proben oder Probenbereichen anzugeben. Einerseits soll ermöglicht werden, auch solche Fluorophore zuverlässig zu lokalisieren, deren axiale Lage nicht von vornherein gut bekannt ist. Andererseits soll die Ausnutzung der Fluoreszenz bei der Bestimmung der Lokalisation vereinzelter Fluorophore in dreidimensional ausgedehnten Proben oder Probenbereichen weiter verbessert werden.

## LÖSUNG

Die Aufgabe der Erfindung wird durch ein lokalisationsmikroskopisches Verfahren mit den Merkmalen des unabhängigen Patentanspruchs 1 sowie durch ein Mikroskop mit den Merkmalen des Anspruchs 15, das eingerichtet ist zur Ausführung eines erfindungsgemäßen Verfahrens, gelöst. Die abhängigen Ansprüche 2 bis 14 betreffen bevorzugte Ausführungsformen des Verfahrens gemäß Patentanspruch 1.

## BESCHREIBUNG DER ERFINDUNG

Um die Ausnutzung der Fluoreszenz bei der Bestimmung der Lokalisation vereinzelter Fluorophore in dreidimensional ausgedehnten Proben oder Probenbereichen weiter zu verbessern, wird gemäß der Erfindung bei der Lokalisation eines vereinzelten anregbaren Fluorophors in einer Probe nach einem MINFLUX-Verfahren unter Anwendung eines 3D-Anregungsdonuts, das heißt einer Intensitätsverteilung von Anregungslicht, die ein lokales Minimum aufweist, das in allen drei Raumrichtungen von Intensitätsanstiegsbereichen umgeben ist, das Lokalisieren in zwei Schritte, einen axialen Lokalisationsschritt und einen lateralen Lokalisationsschritt, aufgeteilt. Im Stand der Technik ist es zwar bekannt, in einem Schritt einen 3D-Anregungsdonut für eine axiale Lokalisation zu nutzen, ohne in diesem Schritt eine laterale Lage neu zu bestimmen. An diese axiale Lokalisation, bei er das zentrale lokale Minimum des 3D-Donuts an zwei axialen Probepositionen auf einer Abtastmuster-Achse, die durch eine geschätzte Lage des anregbaren Fluorophors verläuft, platziert wird, schließt sich dann aber eine simultane Lokalisation in lateraler und axialer Richtung an, für die das zentrale lokale Minimum des 3D-Anregungsdonuts auf einem in drei Raumrichtungen ausgedehnten Abtastmuster um eine geschätzte Lage des anregbaren Fluorophors herum platziert wird.

Das Verfahren zur hochaufgelösten Bestimmung der Lage eines anregbaren Fluorophors in drei Raumrichtungen in einer Probe durch Abtasten des anregbaren Fluorophors mit einem 3D-Anregungsdonut mit einem zentralen lokalen Minimum gemäß der Erfindung umfasst somit einen aus dem Stand der Technik bekannten axialen Lokalisationsschritt,

- bei dem das zentrale lokale Minimum sequenziell an zwei axialen Probepositionen auf einer Abtastmuster-Achse, die durch eine geschätzte Lage des anregbaren Fluorophors verläuft, platziert wird, wobei das Paar der Probepositionen die geschätzte Lage des anregbaren Fluorophors umschließt,
- wobei in dem axialen Lokalisationsschritt von dem anregbaren Fluorophor zu jeder der axialen Probepositionen emittierte Fluoreszenz gemessen und der Messwert der jeweiligen axialen Probeposition zugeordnet wird,
- wobei in dem axialen Lokalisationsschritt aus den den axialen Probepositionen zugeordneten Messwerten eine neue Schätzung der axialen Lage des anregbaren Fluorophors bestimmt wird.

Im Unterschied zum Stand der Technik schließt sich nun aber keine simultane Lokalisation in lateraler und axialer Richtung an, vielmehr folgt ein lateraler Lokalisationsschritt,

- bei dem das zentrale lokale Minimum ausschließlich in einer Abtastmuster-Ebene, die senkrecht zu der Abtastmuster-Achse orientiert ist, sequenziell an mindestens drei um eine in einem oder mehreren früher durchgeführten Schritten geschätzte Lage des anregbaren Fluorophors herum angeordneten lateralen Probepositionen platziert wird,
- wobei in dem lateralen Lokalisationsschritt von dem anregbaren Fluorophor zu jeder der lateralen Probepositionen emittierte Fluoreszenz gemessen und der Messwert der jeweiligen lateralen Probeposition zugeordnet wird,
- wobei in dem lateralen Lokalisationsschritt aus den den lateralen Probepositionen zugeordneten Messwerten eine neue Schätzung der lateralen Lage des anregbaren Fluorophors bestimmt wird.

Es werden mindestens drei laterale Probepositionen genutzt, da dies die minimale Anzahl von Probepositionen ist, aus denen eine laterale Position in zwei lateralen Raumrichtungen erfolgen kann. Bevorzugt werden die Probepositionen so gewählt, dass sie sich gleichmäßig auf einem Kreis um die geschätzte Lage des anregbaren Fluorophors herum befinden. Es ist günstig, sechs derartige Probepositionen auszuwählen, da hierdurch sehr symmetrische Aufnahmebedingungen gegeben sind, was die Folge hat, dass die Unsicherheit der Abschätzung der Lage eines Fluorophors nur wenig von der genauen tatsächlichen Lage des Fluorophors abhängt. Grundsätzlich kann zusätzlich zu den Probepositionen, die sich um die geschätzte Lage Fluorophors herum befinden, auch eine weitere Probeposition genutzt werden, die der geschätzten Lage des Fluorophors entspricht.

Um nun auch solche Fluorophore zuverlässig lokalisieren zu können, deren axiale Lage nicht von vornherein gut bekannt ist, wird gemäß einer Ausführungsform der Erfindung ein Verfahren zur axialen Lokalisation vorgeschlagen, das geeignet ist, die axiale Lage von Fluorophoren zu bestimmen, deren axiale Lage vor Durchführung des Verfahrens gemäß diesem Aspekt der Erfindung nur schlecht bekannt ist, beispielsweise mit einer Unsicherheit von $\pm$ 250 nm oder $\pm$ 500 nm oder mit noch größerer Unsicherheit. Das eingangs der Beschreibung der Erfindung genannte Verfahren ist hierfür nicht geeignet, da mit diesem nur solche Fluorophore lokalisiert werden können, die sich sowohl dann, wenn das zentrale lokale Minimum des 3D-Donuts an der einen als auch dann, wenn es sich an der anderen der beiden Probepositionen auf der Abtastmuster-Achse befindet, deutlich innerhalb eines Bereichs zwischen den Maxima des axialen Intensitätsprofils befinden. Dieser Bereich zwischen den Maxima ist bei der Anordnung nach dem Stand der Technik etwa 500 nm ausgedehnt.

Gemäß dieser Ausführungsform der Erfindung erfolgt eine axiale Lokalisation eines anregbaren Fluorophors durch Abtasten des anregbaren Fluorophors mit fokussiertem Anregungslicht, wobei ein axialer Abtastbereich größer ist als 500 nm oder größer ist als 1000 nm. Der axiale Abtastbereich erstreckt sich insbesondere parallel zu oder entlang einer optischen Achse, entlang der die Probe mit dem Anregungslicht beleuchtet wird. Bei der axialen Lokalisation handelt es sich insbesondere um eine Lokalisation parallel zu oder entlang dieser optischen Achse. Die optische Achse kann mit der im Zusammenhang mit dem erfindungsgemäßen Verfahren definierten Abtastmuster-Achse identisch oder zu dieser parallel sein.

Grundsätzlich kann das Verfahren zur axialen Lokalisation mit einem Gauß'schen Anregungsfokus durchgeführt werden. Dann weist das axiale Intensitätsprofil des Anregungslichts ein zentrales Maximum auf. An späterer Stelle wird ausgeführt, dass für die Lokalisation in bestimmten Fällen nicht unmittelbar das axiale Intensitätsprofil entscheidend ist, sondern ein effektives axiales Intensitätsprofil, das sich aus dem axialen Intensitätsprofil unter Berücksichtigung einer Punktspreizfunktion der Detektion ergibt. Auch dieses effektive axiale Intensitätsprofil weist dann ein zentrales Maximum auf.

Dann ist es bei der Abtastung günstig, dass benachbarte Abtastpunkte höchstens den halben Abstand einer Halbwertsbreite des axialen effektiven Intensitätsprofils aufweisen. Hierdurch wird erreicht, dass das anregbare Fluorophor im Verlauf der Abtastung entweder zumindest einmal mit einer Intensität, die nicht stark von der Maximalintensität abweicht, einmal mit einer reduzierten Intensität und zusätzlich mit stark reduzierter Intensität beaufschlagt wird oder aber es wird, bei anderer Lage relativ zum Muster der Abtastpositionen, zweimal mit reduzierter, aber nur wenig von der Maximalintensität abweichenden Intensität beaufschlagt.

Soll die Abtastung mit einem Gauß'schen Anregungsfokus erfolgen, so erfordert dies, dass dann, wenn dem Verfahren zur axialen Lokalisation nachgeschaltet eine MINFLUX-Lokalisation mit Anwendung eines 3D-Anregungsdonuts erfolgen soll, eine Umschaltung zwischen zwei Beleuchtungsarten erfolgen muss. Für derartige Maßnahmen existieren im Stand der Technik Lösungen. Ein Verzicht auf eine Umschaltung erfordert umgekehrt, dass eine Abtastung mit demselben axialen Intensitätsprofil erfolgen muss wie das für die MINFLUX-Lokalisation verwendete, also ein solches mit einem zentralen Minimum. Letzteres scheint zunächst für eine Abtastung ungeeignet, weil die Anregungsintensität nicht auf einen engen Bereich konzentriert ist, vielmehr ist gerade im zentralen Bereich des axialen Intensitätsprofils ein Minimum, sodass im Bereich um das Zentrum gerade besonders wenig Anregungsintensität bereitgestellt wird. Bei Untersuchungen des Erfinders hat sich aber herausgestellt, dass trotz dieser offensichtlichen Nachteile für eine Abtastung eine axiale Lokalisation auch bei Abtastung mit dem axialen Intensitätsprofil eines 3D-Donuts überraschend gut gelingt.

Dementsprechend kann das Verfahren zur axialen Lokalisation besonders bevorzugt derart durchgeführt werden, dass das fokussierte Anregungslicht ein 3D-Anregungsdonut mit einem effektiven axialen Intensitätsprofil mit einem zentralen lokalen Minimum und mit dem Minimum benachbarten Maxima ist. In diesem Fall können der Abtastbereich sowie Abstände der Probepositionen auch mit Bezug zu dem Abstand der Maxima des effektiven axialen Intensitätsprofils angegeben werden. Es kann dann ein axialer Abtastbereich größer sein als ein Abstand der Maxima des effektiven axialen Intensitätsprofils, bevorzugt ist der Abtastbereich mindestens zweimal so groß wie der Abstand der Maxima des effektiven axialen Intensitätsprofils.

Unter einem Fangbereich wird hier ein Bereich verstanden, innerhalb dessen bei Anwendung eines betreffenden Abtastmusters, das heißt bei Anwendung einer betreffenden Menge von Abtastpunkten, eine eindeutige Lokalisation möglich ist. Bei dem Verfahren zur axialen Lokalisation ist es, wenn für die axiale Lokalisation ein 3D-Anregungsdonut verwendet wird, bevorzugt, dass ein axialer Fangbereich mindestens so groß ist wie der Abstand der Maxima des effektiven axialen Intensitätsprofils.

Das Abtastmuster kann bei Anwendung eines 3D-Anregungsdonuts für die axiale Lokalisation bevorzugt so gewählt werden, dass benachbarte Abtastpunkte höchstens den halben Abstand der Maxima des axialen effektiven Intensitätsprofils aufweisen. Allerdings kann dann das Muster der Abtastpositionen im Zentrum, dessen Ort in der Regel mit der geschätzten Lage des anregbaren Fluorophors übereinstimmt, eine Lücke aufweisen. Das bedeutet, dass der zentralen Position des axialen Bereichs benachbarte Abtastpunkte einen größeren Abstand zueinander aufweisen können. Dieser größere Abstand ist dann höchstens so groß wie der Abstand der Maxima des axialen effektiven Intensitätsprofils.

Weiter bevorzugte Ausführungsformen werden später angegeben, da deren besonderen Eigenschaften gleichzeitig auch besondere Eigenschaften des Verfahrens gemäß der Erfindung entsprechen.

Das Verfahren gemäß der Erfindung, das die Ausnutzung der Fluoreszenz bei der Bestimmung der Lokalisation vereinzelter Fluorophore in dreidimensional ausgedehnten Proben oder Probenbereichen weiter verbessert, kann nun bevorzugt derart durchgeführt werden, dass die Schritte zum Erhalten der geschätzten Lage des anregbaren Fluorophors als einen Schritt eine laterale Vorlokalisation zur Abschätzung einer lateralen Lage des anregbaren Fluorophors, die vor dem axialen Lokalisationsschritt und dem lateralen Lokalisationsschritt durchgeführt wird, das heißt, vor Durchführung der für die Erfindung wesentlichen Schritte durchgeführt wird, umfasst. Im Stand der Technik erfolgt eine solche laterale Vorlokalisation vor Durchführung eines nicht der Erfindung entsprechenden MINFLUX-Verfahrens unter Nutzung eines Gauß'schen Anregungslichts. Dies erfordert eine Umschaltmöglichkeit zur Umschaltung des Anregungslichts von einem Gauß'schen Anregungslicht auf einen 3D-Donut, die technisch und somit ökonomisch vergleichsweise aufwendig ist. Die Vorlokalisation wird zur Verringerung des technischen Aufwands und auch zur Erhöhung der Messgeschwindigkeit bevorzugt durchgeführt, indem das anregbare Fluorophor mit einem 3D-Anregungsdonut zur Fluoreszenz angeregt wird, wobei die angeregte Fluoreszenz mit einem Detektor erfasst wird.

Die laterale Lage des anregbaren Fluorophors kann bei diesem Verfahren bevorzugt abgeschätzt werden aus einer in einer Bildebene, die einen zum Anregungsfokus konfokal gelegenen Punkt enthält, ortsaufgelösten Erfassung der Fluoreszenz. Dabei kann die ortsaufgelöste Erfassung der Fluoreszenzemission in der Bildebene beispielsweise mit einem Array von Photonen zählenden Avalanche-Dioden erfolgen. Aus der Verteilung der gemessenen Anzahlen von Photonen, oder bei Verwendung eines nicht zählenden Detektor-Arrays oder Arrays von Detektoren, aus der Verteilung der Messwerte für die Fluoreszenz in der Bildebene kann dann die Lage des Fluorophors in der Probe abgeschätzt werden, das heißt, es kann abgeschätzt werden, wo innerhalb des Anregungsfokus sich das anregbare Fluorophor befindet. Hierbei ist keinerlei Verlagerung des Anregungsfokus notwendig, auch muss kein Scanner verstellt werden.

Alternativ kann die ortsaufgelöste Erfassung der Fluoreszenzemission in der Bildebene erfolgen, indem der zum Anregungsfokus konfokal gelegene Punkt in der Bildebene relativ zu einer Lochblende verlagert, bevorzugt auf einer Kreisbahn um ein Zentrum verlagert wird, wobei durch die Lochblende hindurchtretende Fluoreszenz mit einem Detektor, der keine örtliche Auflösung aufweisen muss, erfasst und der jeweiligen Lage des konfokal gelegenen Punktes zugeordnet wird. Auch hier kann aus der Verteilung der Messwerte für die Fluoreszenz in der Bildebene die Lage des Fluorophors in der Probe abgeschätzt werden, das heißt, es kann abgeschätzt werden, wo innerhalb des Anregungsfokus sich das anregbare Fluorophor befindet. Der Anregungsfokus soll hierbei ortsfest belassen werden. Dies kann bei gleichzeitiger Verlagerung des zum Anregungsfokus konfokal gelegenen Punkts in der Bildebene beispielsweise erreicht werden, indem eine Ablenkeinheit, die nur auf das Anregungslicht, nicht aber auf das Fluoreszenzlicht wirkt, eine Gegenbewegung zu einer Ablenkeinheit, die sowohl auf das Anregungslicht als auch auf das Fluoreszenzlicht wirkt, ausführt.

Bevorzugt kann das Verfahren gemäß der Erfindung mit dem Verfahren zur axialen Lokalisation kombiniert werden, was dann ermöglicht, solche Fluorophore zuverlässig zu lokalisieren, deren axiale Lage nicht von vornherein gut bekannt ist, wobei gleichzeitig die Ausnutzung der Fluoreszenz bei der Bestimmung der Lokalisation vereinzelter Fluorophore in dreidimensional ausgedehnten Proben oder Probenbereichen weiter verbessert ist. Bei dieser Kombination gilt dann, dass die Schritte zum Erhalten der geschätzten Lage des anregbaren Fluorophors als einen Schritt, bei dem die axiale Koordinate der geschätzten Lage bestimmt wird, eine axiale Vorlokalisation, die vor dem axialen Lokalisationsschritt und dem lateralen Lokalisationsschritt durchgeführt wird, umfasst, die nach dem Verfahren zur axialen Lokalisation eines anregbaren Fluorophors durchgeführt wird.

Es ist dann bevorzugt, dass der laterale Lokalisationsschritt erstmalig nach dem Schritt der axialen Vorlokalisation erfolgt, bevorzugt unmittelbar im Anschluss, und vor dem axialen Lokalisationsschritt, das heißt insbesondere, bevor erstmalig ein axialer Lokalisationsschritt, wie im Zusammenhang mit der Erfindung genannten, durchgeführt wird. Zur Klarstellung sei hier festgehalten, dass das Verfahren zur axialen Lokalisation für sich genommen in diesem Text als axiale Lokalisation bezeichnet wird, das in Kombination mit dem erfindungsgemäßen Verfahren die Rolle einer axialen Vorlokalisation einnimmt und dann auch so bezeichnet wird. Im Unterschied zur axialen Lokalisation wird im Zusammenhang mit dem erfindungsgemäßen Verfahren jeweils von axialem Lokalisationsschritt gesprochen; dieser Begriff bezeichnet also jeweils einen Schritt des Verfahrens gemäß der Erfindung.

Sowohl das Verfahren gemäß der Erfindung als solches als auch dieses Verfahren in Verbindung mit dem Verfahren zur axialen Lokalisation kann derart durchgeführt werden, dass der axiale Lokalisationsschritt erstmalig vor einem erstmaligen Durchführen des lateralen Lokalisationsschritts durchgeführt wird. Eine laterale Lokalisation nach einem MINFLUX-Verfahren mit Anwendung eines 3D-Anregungsdonuts kann umso besser durchgeführt werden, je besser die axiale Lage des anregbaren Fluorophors bereits bekannt ist. Insbesondere verhält sich die Lokalisation mit einem 3D-Anregungsdonut in axialer Richtung in gewissem Sinne gutmütiger als die Lokalisation in lateraler Richtung, insofern dass eine Unsicherheit in lateraler Richtung weniger kritisch für die Genauigkeit einer axialen Lokalisation ist. Deswegen ist immer dann, wenn keine axiale Lokalisation nach dem Verfahren gemäß dem zweiten Aspekt oder nach der angegebenen Alternative, bei der eine Umschaltung der Intensitätsverteilung des Anregungslichts erfolgt, als Vorlokalisation durchgeführt wird, stark bevorzugt, den axialen Lokalisationsschritt erstmalig vor einem erstmaligen Durchführen des lateralen Lokalisationsschritts durchzuführen.

Das Verfahren gemäß der Erfindung kann bevorzugt iterativ durchgeführt werden. Wird das Verfahren gemäß der Erfindung mit dem Verfahren zur axialen Lokalisation als Verfahren zur Vorlokalisation kombiniert, wird dieses zumindest in der Regel nur einmal durchgeführt, die Iteration richtet sich dann auf das im Gesamtverfahren folgende Verfahren gemäß der Erfindung. Bei der iterativen Durchführung werden mehrere axiale Lokalisationsschritte, mehrere laterale Lokalisationsschritte oder sowohl mehrere axiale Lokalisationsschritte als auch mehrere laterale Lokalisationsschritte durchgeführt. Die Trennung der dreidimensionalen Lokalisation in zwei getrennte Teilschritte ermöglicht dabei, die Schrittfolge an das genaue Beobachtungsziel und an die Probeneigenschaften anzupassen.

Beispielsweise kann nach einem lateralen Lokalisationsschritt nächstfolgend ein axialer Lokalisationsschritt gerade dann durchgeführt werden, wenn in dem lateralen Lokalisationsschritt eine neue Schätzung der lateralen Lage des anregbaren Fluorophors mit einer vorgegebenen Präzision bestimmt wurde. Je nach der Abweichung der tatsächlichen Lage des anregbaren Fluorophors von der geschätzten Lage kann die vorgegebene Präzision in einem oder in mehreren lateralen Lokalisationsschritten erzielt werden.

Weiter kann es sowohl in Verbindung mit der Anwendung des genannten Präzisionskriteriums als auch allgemein bei weiteren Arten einer iterativen Durchführung bevorzugt sein, dass mehrere laterale Lokalisationsschritte in unmittelbarer Abfolge durchgeführt werden. Hierbei wird dann weiter bevorzugt aus der geschätzten Lage des anregbaren Fluorophors und der in einem lateralen Lokalisationsschritt erhaltenen neuen Schätzung der lateralen Lage des anregbaren Fluorophors eine neue geschätzte Lage des anregbaren Fluorophors bestimmt, die für den jeweils folgenden lateralen Lokalisationsschritt die geschätzte Lage des anregbaren Fluorophors bildet. Diese Art der iterativen Durchführung ist beispielsweise dann bevorzugt, wenn vornehmlich eine gute laterale Lokalisation angestrebt wird.

Insbesondere wenn es hinsichtlich der angestrebten Lokalisationsgenauigkeit keine Vorzugsrichtung gibt oder auch dann, wenn sich das zu lokalisierende Fluorophor in der Probe in allen Raumrichtungen bewegt und wenn diese Bewegung des Fluorophors verfolgt werden soll, ist es bevorzugt, dass eine alternierende Abfolge von axialen Lokalisationsschritten und lateralen Lokalisationsschritten durchgeführt wird, wobei jeweils aus der geschätzten Lage des anregbaren Fluorophors und der in einem Schritt erhaltenen neuen Schätzung der axialen Lage oder der lateralen Lage des anregbaren Fluorophors eine neue geschätzte Lage des anregbaren Fluorophors bestimmt wird, die für den jeweils folgenden Schritt die geschätzte Lage des anregbaren Fluorophors bildet.

Dass jeweils aus der geschätzten Lage und einer neuen Schätzung eine neue geschätzte Lage bestimmt wird, kann bedeuten, dass beispielsweise, wenn die neue Schätzung eine Schätzung einer axialen Lage ist, eine neue geschätzte Lage bestimmt wird, indem die ursprüngliche axiale Koordinate unmittelbar durch die neu geschätzte axiale Lage ersetzt wird, während die laterale Koordinate in diesem Beispielfall beibehalten wird. Es ist aber beispielsweise auch möglich, dass als neue axiale Koordinate der neuen geschätzten Lage aus mehreren vorangehend bestimmten Schätzungen bestimmt wird, das heißt insbesondere, dass auch die axiale Koordinate der ursprünglichen geschätzten Lage bei der Bestimmung der neuen geschätzten Lage berücksichtigt wird. Sinngemäß gilt Ähnliches auch für den umgekehrten Fall, bei dem die neue Schätzung die Schätzung einer axialen Lage ist oder auch für Fälle, in denen mehrere axiale Lokalisationen oder mehrere laterale Lokalisationen nacheinander durchgeführt werden. In vielen Fällen ist es sinnvoll, bei der Bestimmung der Koordinate der Lage für eine Ortsrichtung nicht nur den letzten Wert zu betrachten. Dies gilt insbesondere sogar dann, wenn sich das Fluorophor in der Probe bewegt. Dann nämlich kann aus der Serie der vorangehenden axialen und lateralen Schätzungen eine Richtung und eine Geschwindigkeit der Bewegung des Fluorophors bestimmt werden und es kann die zukünftige Lage, das heißt, die Lage, an der sich das Fluorophor bei dem nächstfolgenden Schritt befinden wird, vorab geschätzt werden.

Die iterativen Verfahren können bevorzugt derart durchgeführt werden, dass das Paar der Probepositionen die geschätzte Lage des anregbaren Fluorophors in einem späteren axialen Lokalisationsschritt dichter umschließt als in einem früheren axialen Lokalisationsschritt, oder dass in einem späteren lateralen Lokalisationsschritt das zentrale lokale Minimum an lateralen Probepositionen, die dichter um die geschätzte Lage des anregbaren Fluorophors herum angeordnet sind als in einem früheren lateralen Lokalisationsschritt, platziert wird. Beide genannten Maßnahmen können auch kombiniert werden. Das heißt, das Grundprinzip der iterativen MINFLUX-Verfahren kann hier jeweils separat sowohl für die laterale als auch die axiale Lokalisation angewendet werden. Dementsprechend ist es auch möglich, wie beim iterativen MINFLUX bekannt, die Intensität des 3D-Anregungsdonuts jeweils abhängig von der Größe des Abtastmusters, das heißt des Durchmessers oder, bei der axialen Lokalisation, des axialen Abstands der Probepositionen auszuwählen. Ähnlich wie eine Änderung der Intensität des 3D-Anregungsdonuts wirkt sich eine Änderung der jeweiligen Beobachtungsdauer aus, die ebenfalls durchgeführt werden kann.

Sowohl bei Durchführung des Verfahrens gemäß der Erfindung als auch bei Durchführung des Verfahrens zur axialen Lokalisation kann die jeweils notwendige Verlagerung des Anregungslichts in axialer Richtung erfolgen, indem ein Anregungslicht über einen verformbaren Spiegel durch ein Objektiv in die Probe geleitet wird, wobei durch eine Änderung der Form des verformbaren Spiegels die axiale Positionierung erfolgt. Das heißt, bei Durchführung eines axialen Lokalisationsschritts erfolgt eine Positionierung des 3D-Anregungsdonuts an eine axiale Position für das sequenzielle Platzieren an die zwei axialen Probepositionen bevorzugt, indem ein verformbarer Spiegel im Anregungsstrahlengang entsprechend verformt wird; ebenso erfolgt eine Positionierung des 3D-Anregungsdonuts an eine axialen Position für das Einstellen einer Abtastmuster-Ebene bevorzugt, indem ein verformbarer Spiegel im Anregungsstrahlengang entsprechend verformt wird; schließlich erfolgt eine Positionierung des fokussierten Gauß'schen Anregungslichts oder des 3D-Anregungsdonuts für ein Abtasten bei der axialen Lokalisation, indem ein verformbarer Spiegel im Anregungsstrahlengang entsprechend verformt wird. Zu diesem Zweck ist der verformbare Spiegel bevorzugt in einer Ebene einer Rückapertur des Objektivs oder einer hierzu konjugierten Ebene platziert, das heißt, in einer Ebene, in der eine Pupille des Objektivs ausgebildet sein kann.

Die Bestimmung der Lage aus den jeweiligen Messwerten kann sowohl bei Verfahren gemäß der Erfindung als auch bei Verfahren zur axialen Lokalisation auf besonders einfache Weise derart erfolgen, dass eine Vektorsumme ausgewertet wird. Das bedeutet, dass die neue Schätzung der axialen Lage des anregbaren Fluorophors oder die neue Schätzung der lateralen Lage des anregbaren Fluorophors durch das Auswerten einer Vektorsumme erhalten wird oder dass ein Bestimmen der axialen Koordinate der geschätzten Lage bei der axialen Vorlokalisation oder dass die axiale Lokalisation durch ein Auswerten einer Vektorsumme erfolgt. Bevorzugt hat die Vektorsumme die Form

$$\vec{u}\left(p_j, \vec{b}_j\right) = \frac{\sum_{j=1}^{m} p_j \cdot \vec{b}_j}{\sum_{j=1}^{m} p_j}$$

, wobei die $p_j$ **Photonenanzahlen** oder Intensitäten repräsentieren, die zu Positionen $\vec{b}_j$ des 3D-Anregungsdonuts oder des fokussierten Anregungslichts detektiert wurden.

Bei einer einfachen Berechnung dieser Vektorsumme wird bei jedem der Verfahren für vorgegebene Abtastmuster, sofern der Einfluss von Rauschen außer Acht gelassen wird und sofern kein Hintergrundsignal vorhanden ist, ein bestimmter Wert genau für je eine tatsächliche Lage eines Fluorophors innerhalb eines bestimmten Bereichs von Lagen erhalten, das heißt, zu einem berechneten Wert gehört genau eine Lage. Daher ist es jeweils möglich, dass der Wert der Vektorsumme entsprechend einer vorbestimmten Kalibrierfunktion korrigiert wird, um die neue Schätzung der axialen Lage oder die neue Schätzung der lateralen Lage oder bei der axialen Vorlokalisation die axiale Koordinate der geschätzten Lage oder die axiale Lokalisation zu erhalten. Die jeweilige anzuwendende Kalibrierfunktion kann jeweils aus einer Simulation bestimmt werden.

Ein vorhandenes Hintergrundsignal, beispielsweise Hintergrundfluoreszenz, eingestreutes Umgebungslicht oder innerhalb des Mikroskops gestreutes oder reflektiertes Licht, wirkt sich auf den Term im Zähler der Vektorsumme im Mittel nicht aus, wohl aber auf den Nenner. Das bedeutet, der Wert der Vektorsumme $\vec{u}(p_j, \vec{b}_j)$ in der oben genannten Form ist systematisch abhängig von der Menge des Hintergrundsignals. Bevorzugt wird daher bei dem Auswerten der Vektorsumme die Menge des Hintergrundsignals berücksichtigt. Dies kann besonders einfach geschehen, indem im Nenner in der obigen Formel der Wert des Hintergrundsignals subtrahiert wird. Die Menge des Hintergrundsignals wird auch zu diesem Zweck bevorzugt gleitend aus Messdaten bestimmt.

Beide genannten Verfahren, also das Verfahren gemäß der Erfindung sowie das Verfahren zur axialen Lokalisation, werden bevorzugt in Echtzeit durchgeführt. Dies wird begünstigt dadurch, dass bei Verfahren gemäß der Erfindung die neuen Lagen jeweils durch Auswertungen einfacher Vektorsummen erhalten werden können, beziehungsweise dadurch, dass bei Verfahren zur axialen Lokalisation die Lokalisation aus einer Auswertung einer einfachen Vektorsumme erhalten werden kann.

An die Durchführung des Echtzeitverfahrens beziehungsweise zeitlich in einem beliebigen Zeitraum nach der Durchführung des Echtzeitverfahrens kann sich eine weitere Datenanalyse anschließen. Zu diesem Zweck werden jeweils zu den einzelnen Schritten während der Durchführung erhaltene Daten dauerhaft gespeichert. Aus einer solchen Datenanalyse können beispielsweise noch genauere Lokalisationen erhalten werden. Die erreichbare Genauigkeit hängt hierbei aber von der Qualität der erhobenen Daten ab. Das bedeutet, die erfindungsgemäßen Verfahren ermöglichen nicht nur eine bessere Echtzeitauswertung, sondern auch eine verbesserte Qualität der nachträglichen Analyseergebnisse.

Ein erfindungsgemäßes Mikroskop ist dadurch gekennzeichnet, dass es eine Steuereinrichtung aufweist, die eingerichtet ist, das Mikroskop derart zu steuern, dass ein Verfahren gemäß dem der Erfindung durchgeführt wird. Bevorzugt ist die Steuereinrichtung derart eingerichtet, dass sowohl ein Verfahren gemäß der Erfindung als auch ein Verfahren zur axialen Lokalisation oder ein kombiniertes Verfahren durchgeführt werden kann, ja nach Wahl durch einen Nutzer.

Besonders bevorzugt weist ein erfindungsgemäßes Mikroskop einen verformbaren Spiegel zur axialen Verlagerung eines Anregungsfokus, das umfasst auch die axiale Verlagerung eines 3D-Anregungsdonuts, in einer Probe auf. Der verformbare Spiegel ist bevorzugt in einer Ebene einer Rückapertur des Objektivs oder einer hierzu konjugierten Ebene platziert, das heißt, in einer Ebene, in der eine Pupille des Objektivs ausgebildet sein kann.

Vorteilhafte Weiterbildungen der Erfindung ergeben sich aus den Patentansprüchen, der Beschreibung und den Zeichnungen und den zugehörigen Erläuterungen zu den Zeichnungen. Einige der Zeichnungen sind Ablaufdiagramme, anhand derer die erfindungsgemäßen Verfahren insgesamt sehr ausführlich erläutert werden.

Die Ansprüche sind nicht dahingehend zu verstehen, dass nur solche Gegenstände, Vorrichtungen oder Verfahren, die jeweils nur alle oder keines der Merkmale eines Unteranspruchs zusätzlich zu den Merkmalen des unabhängigen Verfahrensanspruchs 1 und des Vorrichtungsanspruchs 15 aufweisen, mögliche Weiterbildungen der Erfindung sein können. Vielmehr können sich weitere Weiterbildungen aus in der Beschreibung genannten sowie aus den Zeichnungen und den zugehörigen Erläuterungen entnehmbaren Merkmalen, die einzeln oder kumulativ zur Wirkung kommen können, ergeben.

## KURZBESCHREIBUNG DER FIGUREN

**Fig. 1** ist der Ablauf einer Lokalisation in zwei Dimensionen nach einem iterativen MINFLUX-Verfahren, wie es sich aus dem Stand der Technik ergibt, dargestellt.

**Fig. 2** ist eine Darstellung zum Ablauf einer MINFLUX-Lokalisation in drei Dimensionen gemäß Stand der Technik.

**Fig. 3** ist eine Darstellung zum Ablauf einer MINFLUX-Lokalisation in drei Dimensionen gemäß einer Ausführungsform der Erfindung.

**Fig. 4** ist eine Darstellung zu einem Verfahren zur axialen Vorlokalisation gemäß einem Aspekt der Erfindung unter Nutzung eines 3D-Anregungsdonuts.

**Fig. 5** ist eine Darstellung zu einem Verfahren zur axialen Vorlokalisation gemäß einem Aspekt der Erfindung, das einen stärker erweiterten Fangbereich aufweist.

**Fig. 6** ist ein Kontur-Plot eines Schnitts einer effektiven Intensitätsverteilung eines 3D-Anregungsdonuts 8 entlang einer optischen Achse.

**Fig. 7** - **10** geben Ergebnisse von Simulationsrechnungen zur Bestimmung einer axialen Lage eines anregbaren Fluorophors unter Verwendung eines 3D-Anregungsdonuts und verschiedener Abtastmuster wieder.

**Fig. 11** - **13** geben entsprechende Ergebnisse für bevorzugte Abtastmuster mit erweitertem Fangbereich wieder.

**Fig. 14** ist eine Darstellung zu einem weiteren Verfahren zur axialen Vorlokalisation mit einem erweiterten Fangbereich auf Basis einer kontinuierlichen oder feiner gerasterten Abtastung mit einem 3D-Anregungsdonut.

**Fig. 15**      ist eine schematische Darstellung einer Ausführungsform eines erfindungsgemäßen Mikroskops.

**FIGURENBESCHREIBUNG UND ERLÄUTERUNG DER ERFINDUNG ANHAND DER FIGUREN**

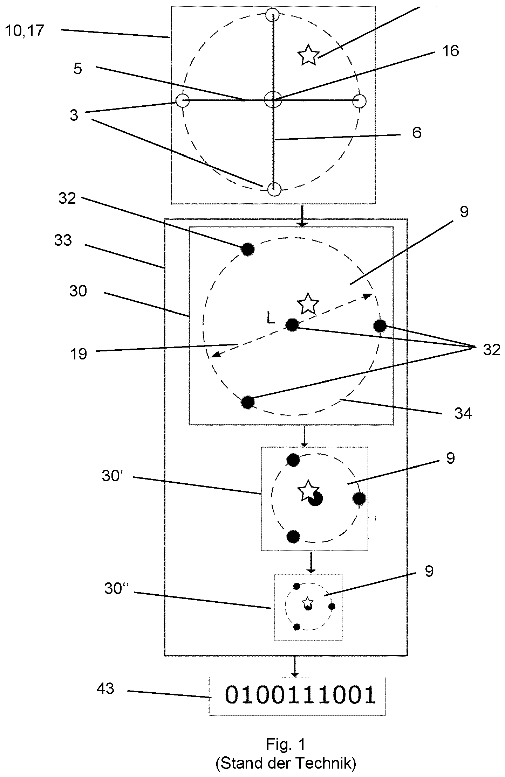

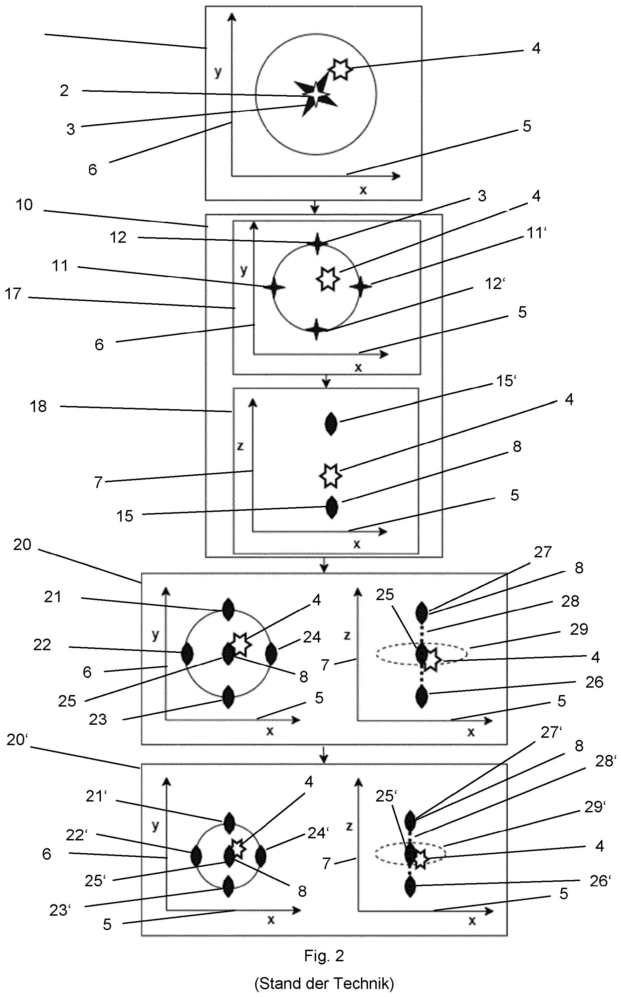

Im Folgenden wird die Erfindung anhand in den Figuren dargestellter Ausführungsbeispiele weiter erläutert und beschrieben. Zur Verdeutlichung der Unterschiede zum Stand der Technik wird zunächst dieser anhand der Figuren 1 und 2 erläutert.

In **Fig. 1** ist ein möglicher Ablauf einer iterativen MINFLUX-Lokalisation in zwei Dimensionen dargestellt, wie er sich aus dem Stand der Technik ergibt. Ein vereinzeltes Fluorophor 4 wird mit einer Gauß'schen Anregungsintensitätsverteilung 3 beaufschlagt, die an vier Positionen um eine geschätzte Lage 16 des Fluorophors herum platziert wird, derart, dass je zwei der Positionen in einer ersten Ortsrichtung 5 und einer zweiten Ortsrichtung 6 bezüglich der geschätzten Lage 16 einander gegenüberliegen. Aus zu je zwei gemessenen Fluoreszenzintensitäten oder Photonenanzahlen wird eine Lage des anregbaren Fluorophors in der ersten Ortsrichtung 5 und in der zweiten Ortsrichtung 6 bestimmt. Dieser Schritt einer Vorlokalisation 10, bei dem es sich hier um eine laterale Vorlokalisation 17 handelt, ist beispielsweise aus der im Abschnitt zum Stand der Technik genannten Publikation "Nanometer resolution imaging and tracking of fluorescent molecules with minimal photon fluxes" im Zusammenhang mit einem anschließenden Verfolgen der Bewegung eines Fluorophors bekannt. An die Vorlokalisation 10 schließt sich eine iterative Echtzeit-MINFLUX-Lokalisation 33 an, die hier drei Schritte lateraler MINFLUX-Lokalisationen 30,30',30" umfasst. Für eine laterale MINFLUX-Lokalisation 30,30',30" wird eine Anregungslichtverteilung, die in lateraler Richtung im Zentrum des Fokus ein lokales Intensitätsminimum, idealerweise eine Nullstelle aufweist, kurz als 2D-Anregungsdonut 32 bezeichnet, an drei Positionen auf einem Kreis um die bei der Vorlokalisation bestimmte Lage des Fluorophors 4 und an diese selbst platziert. Das Abtastmuster 9 enthält also vier Abtastpositionen. Es wird Fluoreszenzlicht detektiert, bis aus den Messungen die Lage des anregbaren Fluorophors 4 beispielsweise um ein vorbestimmtes Maß genauer abgeschätzt werden kann. Wie diese Abschätzung erfolgt, ist in derselben Publikation beschrieben und wird im Abschnitt zum Stand der Technik referiert. Anschließend wird vor der Durchführung einer lateralen MINFLUX-Lokalisation 30' das Abtastmuster 9 derart verlagert, dass dessen Zentrum mit der im vorangehenden Schritt bestimmten Lage des anregbaren Fluorophors 4, die näher an der tatsächlichen Lage des anregbaren Fluorophors 4 ist, übereinstimmt; der Durchmesser 19 des Abtastmusters 9 wird gleichzeitig verkleinert. Wieder wird Fluoreszenzlicht detektiert, bis aus den Messungen die Lage des anregbaren Fluorophors 4 beispielsweise um ein vorbestimmtes Maß genauer abgeschätzt werden kann und anschließend erfolgt in derselben Weise eine Verlagerung und Verkleinerung des Durchmessers 19 des Abtastmusters 9, bevor schließlich eine weitere laterale MINFLUX-Lokalisation 30" durchgeführt wird. An die iterative Echtzeit-MINFLUX-Lokalisation 33 schließt sich schließlich eine finale Lokalisation 43 an, die bei einer Analyse der bei der iterativen Echtzeit-MINFLUX-Lokalisation 33 erhalten Messdaten erhalten wird.

In **Fig. 2** ist ein Ablauf einer iterativen Echtzeit-MINFLUX-Lokalisation in drei Dimensionen zusammen mit Vorlokalisationsschritten dargestellt, der im Wesentlichen dem in der im Abschnitt zum Stand der Technik genannten Publikation "MINFLUX nanoscopy delivers 3D multicolor nanometer resolution in cells" beschriebenen Ablauf entspricht. In einem Teilbereich einer Probe wird mittels fokussierten Aktivierungslichts ein vereinzeltes Fluorophor in einen anregbaren Zustand versetzt. Alternativ ist der erste Schritt ein Auffinden 1 eines anregbaren Fluorophors 4. Dieses anregbare Fluorophor 4 wird bei einer Vorlokalisation 10 bei einem Schritt zu einer lateralen Vorlokalisation 17 mittels einer Gauß'schen Anregungsintensitätsverteilung 3 (in Figur 2 durch einen schwarzen vierzackigen Stern symbolisiert) in Echtzeit lokalisiert, wie im Zusammenhang mit Figur 1 beschrieben. Die Gauß'sche Anregungsintensitätsverteilung 3 wird hierfür an zwei laterale Positionen 11,11' in einer ersten Ortsrichtung 5 und an zwei laterale Positionen 12,12' in einer zweiten Ortsrichtung 6 platziert. Anschließend wird die Probe in einem Schritt einer axialen Vorlokalisation 18 mit fokussiertem Anregungslicht beaufschlagt, wobei der Fokus die Form eines 3D-Donuts hat, das heißt, wobei die Intensitätsverteilung ein lokales Minimum aufweist, das in allen drei Raumrichtungen von Intensitätsanstiegsbereichen umgeben ist. Die Probe wird somit mit einem 3D-Anregungsdonut 8 beleuchtet. Der 3D-Anregungsdonut 8 wird hierbei nacheinander an insgesamt zwei axiale Positionen 15,15' platziert, wobei das lokale Intensitätsminimum sich in lateraler Richtung jeweils an der bei der lateralen Vorlokalisation 17 bestimmten Position befindet. In der axialen Ortsrichtung 7 wird das lokale Minimum dabei einmal entlang der optischen Achse oberhalb und einmal unterhalb der erwarteten Fluorophorposition platziert. Der Abstand der beiden Positionen zueinander wird in der genannten Publikation zum Stand der Technik zwar nicht ausdrücklich angegeben, aus den Angaben zu der Einstellung der axialen Fokusposition des 3D-Anregungsdonuts 8 folgt aber, dass dieser größtenfalls 400 nm betragen kann. Dies bedeutet, dass sich das anregbare Fluorophor 4, wenn dessen axiale Lage mit diesem Verfahren genauer bestimmt werden soll, für beide Positionen des 3D-Anregungsdonuts 8 zwischen dem oberen und unteren Intensitätsmaximum des axialen Intensitätsprofils des 3D-Anregungsdonuts 8 befinden muss. Aus den an den axialen Positionen 15,15' gemessenen Fluoreszenzsignalen wird eine axiale Lage des anregbaren Fluorophors 4 bestimmt. An diese Vorlokalisation 10 schließt sich eine genauere, in Echtzeit durchgeführte 3D-Lokalisation 20 an, wobei ein Abtastmuster mit sieben Positionen 21 bis 27, von denen fünf Positionen 21 bis 25 in einer Abtastmuster-Ebene 29 liegen, von denen wiederum eine Position eine zentrale Position 25 im Zentrum der Abtastmuster-Ebene 29 ist und vier gleichmäßig verteilt auf einem Kreis um die zentrale Position 25 herum liegen, verwendet wird. Das Abtastmuster 9 weist zwei weitere Positionen 26,27 auf, die gemeinsam mit der zentralen Position 25 der Abtastmuster-Ebene 29 auf einer Abtastmuster-Achse 28 liegen, sodass insgesamt drei Positionen 25,26,27 auf der Abtastmuster-Achse 28 liegen. Der 3D-Anregungsdonut 8 wird nun sequenziell an die sieben Positionen 21 bis 27 des Abtastmusters 9 platziert, wobei die zentrale Position 25 des Abtastmusters 9 an die bei der Vorlokalisation 10 bestimmte Lage des anregbaren Fluorophors 4 platziert wird. An diese 3D-Lokalisation 20 schließt sich eine weitere 3D-Lokalisation 20' an, bei der ein verkleinertes, ansonsten aber identisches Abtastmuster 9 mit den Positionen 21' bis 27' verwendet wird. Dies kann iterativ fortgesetzt werden, bis das anregbare Fluorophor 4 seine Fluoreszenzfähigkeit verliert. Die 3D-Lokalisationen 20,20' erfolgen dabei in der ersten Ortsrichtung 5, der zweiten Ortsrichtung 6 und der axialen Ortsrichtung 7 unter Verwendung eines Schätzers der Form

$$\hat{\vec{r}}_{\mathrm{mLMS}}^{(k)}\bigl(\hat{\vec{p}},\vec{\beta}\bigr) = -\frac{1}{1-\dfrac{L^2\ln(2)}{\mathrm{fwhm}^2}}\left(\sum_{j=0}^{1}\beta_j\hat{p}_0^{\,j}\right)\sum_{i=0}^{6}\hat{p}_i\cdot\bar{r}_{\mathrm{b}_i}\,,$$

wobei die $\beta_j$ skalare Kalibrierwerte sind, die so gewählt sind, dass in einem Mittel bei der Lokalisation in Echtzeit ein möglichst geringer Bias auftritt. Da der Verlauf der Intensitätsverteilung eines 3D-Anregungsdonuts 8 nicht kugelsymmetrisch ist, führt dies dazu, dass die Kalibrierwerte $\beta_j$ entweder zugunsten besserer axialer Ortsbestimmungen so gewählt werden, dass die laterale Ortsbestimmung nicht optimal ist oder umgekehrt so, dass die axiale Ortsbestimmung nicht optimal ist. Eine weitere Schwierigkeit besteht darin, dass der Verlauf der Intensität eines 3D-Anregungsdonuts 8 entlang einer Senkrechten zur Achse stark abhängt vom axialen Abstand dieser Senkrechten zum Zentrum des 3D-Anregungsdonuts 8. Das Verfahren gemäß Stand der Technik mit dem oben genannten Schätzer nutzt folglich die emittierten Photonen schlechter aus als dies beim Vergleichsverfahren in zwei Dimensionen der Fall ist.

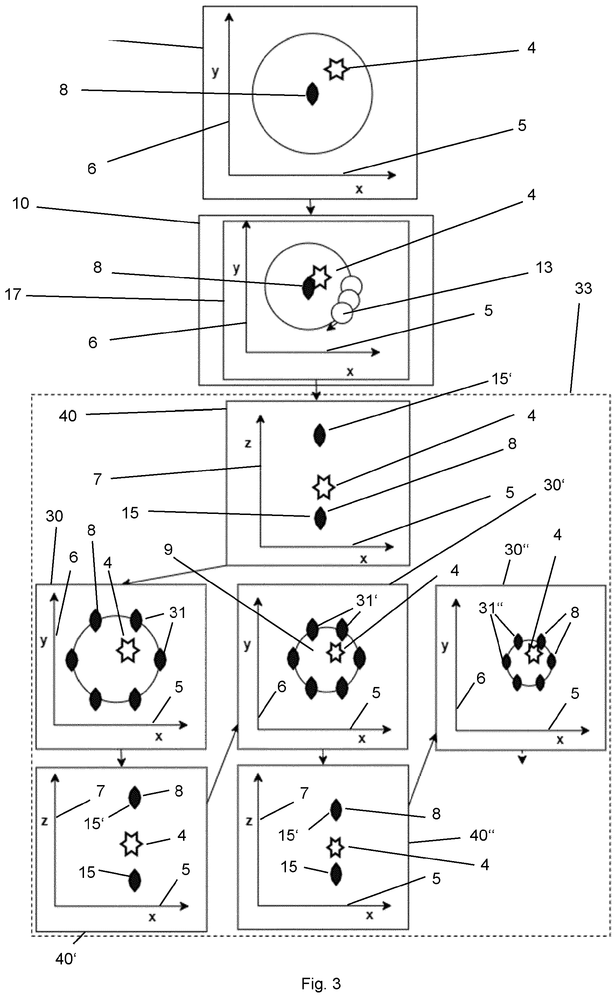

In **Fig. 3** ist zusammen mit Vorlokalisationsschritten ein Ablauf einer iterativen MINFLUX-Lokalisation in drei Dimensionen gemäß einer Ausführungsform der Erfindung dargestellt. Das Verfahren beginnt mit dem Auffinden 1 eines anregbaren Fluorophors 4. Dies kann auf verschiedene Arten geschehen, beispielsweise durch eine Anregung und Beobachtung im Weitfeld oder durch ein konfokales Abscannen der Probe. Je nach Probe kann für das Auffinden zusätzlich zu dem Anregungslicht auch Aktivierungslicht verwendet werden. Wird die Probe mit Anregungslicht abgescannt, so kann hierfür eine Gauß'sche Anregungsintensitätsverteilung 3 verwendet werden. Es kann aber bevorzugt auch ein 3D-Anregungsdonut 8 verwendet werden. Dies ist deshalb bevorzugt, weil dadurch vermieden wird, dass mehrere Lichtpfade, zwischen denen schnell umgeschaltet werden kann, benötigt werden. Wenn ein anregbares Fluorophor 4 aufgefunden ist, so ist damit die Lage des anregbaren Fluorophors 4 in der Regel mit einer Unsicherheit in der Größenordnung des Beugungslimits bekannt.

Nach dem Auffinden 1 wird eine Vorlokalisation 10 durchgeführt. Diese Vorlokalisation 10 kann auch bei Durchführung eines erfindungsgemäßen Verfahrens nach einer aus dem Stand der Technik bekannten Methode erfolgen. In der dargestellten Ausführungsform erfolgt sie unter Verwendung eines 3D-Anregungsdonuts 8. Mit diesem wird eine laterale Vorlokalisation 17 durchgeführt. Dabei wird die Lage des anregbaren Fluorophors 4 in einer ersten Ortsrichtung 5 und einer zweiten Ortsrichtung 6 abgeschätzt aus einer in einer konfokal zum Anregungsfokus gelegenen Bildebene ortsaufgelösten Erfassung der Fluoreszenzemission, das heißt des Beugungsscheibchens in der Bildebene. Eine solche ortsaufgelöste Erfassung kann beispielsweise mit einem Array von Photonen zählenden Avalanche-Dioden, d.h. mit einem, englisch abgekürzt, SPAD-Array, erfolgen oder sie kann, wie in der Figur dargestellt, erfolgen, indem in der Detektionsebene das Beugungsscheibchen mit einer Lochblende abgetastet wird. Es ist dabei günstig, die Lochblende mit ihrem Zentrum auf einer Kreisbahn um ein Zentrum herum zu führen oder sequenziell an eine Anzahl von mindestens drei, beispielsweise sechs bevorzugt gleichmäßig verteilten Positionen auf einer solchen Kreisbahn zu platzieren. Das Zentrum ergibt sich dabei als Zentrum der gedachten Abbildung einer gedachten Punktlichtquelle, die exakt im Zentrum des 3D-Anregungsdonuts 8 gelegen ist. Die Kreisbahn ist in der Figur als Lochblenden-Orbit 13 durch drei auf einem Abschnitt eines Kreisumfangs eingezeichnete kleinere Kreise und einen Pfeil gekennzeichnet. Der Durchmesser der kleineren Kreise steht hierbei nicht für den Durchmesser der Lochblende. Die Lochblende kann vielmehr so groß sein, dass die Abbildung der Lochblende in der Probe zu jedem Zeitpunkt das Zentrum des Anregungsfokus umfasst. Der Durchmesser des Lochblenden-Orbits 13 wird günstigerweise möglichst groß gewählt, wobei die genauen Bedingungen einerseits vom erhältlichen Fluoreszenzsignal und vom Fluoreszenzhintergrund abhängen können, insbesondere aber auch von praktischen Randbedingungen abhängen werden. Die Anmelderin nutzt beispielsweise eine Einrichtung, bei der der 3D-Anregungsdonut 8 sowohl durch einen elektrooptischen Scanner abgelenkt wird, mit dessen Hilfe jeweils die einzelnen Punkte der Abtastmuster 9 angefahren werden, als auch über einen Galvo-Scanner geführt wird, der für die Abtastung der Probe genutzt wird. Der Galvo-Scanner befindet sich dabei auch im Detektionsstrahlengang, der elektrooptische Scanner aber nicht. Konkret erfolgt nun die Abtastung des Lochblenden-Orbit 13 bei gleichzeitigem Festhalten des Ortes der Anregung mit dem 3D-Anregungsdonut 8, indem mittels des Galvo-Scanners die Projektion der im Detektionsstrahlengang platzierten Lochblende in die Probe sequenziell an die gewählten Positionen des Lochblenden-Orbits 13 platziert wird, während der elektrooptische Scanner dem Anregungslicht eine Gegenbewegung derart aufprägt, dass der 3D-Anregungsdonut in der Probe ortsfest bleibt. Daraus ergibt sich eine maximale Ausdehnung des Lochblenden-Orbits 13, die der Größe des alleine durch den elektrooptischen Scanner ansteuerbaren Scanfelds entspricht. Da bei dieser Art der Ortsbestimmung, gleich wie sie konkret realisiert wird, der 3D-Anregungsdonut 8 ortsfest bleibt und somit das anregbare Fluorophor 4 während der Lokalisation immer derselben Anregungsintensität ausgesetzt ist, wirkt sich die Form der Intensitätsverteilung des 3D-Anregungsdonuts 8 nicht unmittelbar auf die Güte der lateralen Vorlokalisation 17 aus, sondern allenfalls mittelbar durch unterschiedliche Signal-zu-Hintergrundverhältnisse abhängig von der tatsächlichen Lage des anregbaren Fluorophors 4 relativ zum Zentrum des 3D-Anregungsdonuts 8.

Das Auffinden 1 und die laterale Vorlokalisation 10 können auch in einem Schritt zusammenfallen. Beispielsweise ist es möglich, jeweils mit dem 3D-Anregungsdonut 8 einen Ort in der Probe anzusteuern und in der oben beschriebenen Weise Fluoreszenz zu detektieren. Abhängig vom Signal, insbesondere abhängig davon, ob oder wieviel Fluoreszenz detektiert wird, kann erkannt werden, ob in dem Fokusbereich des 3D-Anregungsdonuts 8 ein anregbares Fluorophor 4 vorhanden ist oder nicht. Aus den hierbei erhaltenen Messwerten kann aber unmittelbar auch eine Lage des anregbaren Fluorophors 4 innerhalb des Fokusbereichs erhalten werden. Wird keine Fluoreszenz oder nur ein geringes Signal erfasst, so kann ein anderer, beispielsweise ein benachbarter Ort in der Probe angesteuert werden, an dem die vorgenannte Messung wiederholt wird.

Es hat sich bei Untersuchungen der Anmelderin herausgestellt, dass eine iterative Echtzeit-MINFLUX-Lokalisation 33 sogar dann durchgeführt werden kann, wenn beim Auffinden 1 oder bei der der lateralen Vorlokalisation 17 oder sogar bei einem später nachfolgenden Lokalisationsschritt tatsächlich mehrere anregbare Fluorophore 4 innerhalb des Fokusbereichs des 3D-Anregungsdonuts vorhanden sind und zum Signal beitragen. Dann wird zwar in dem betreffenden Schritt die Lage keines der vorhandenen anregbaren Fluorophore 4 mit der in dem Schritt bestmöglichen Genauigkeit bestimmt, sondern es wird eine Art mittlerer Lage erhalten, aber bei Folgeschritten tritt mit gewisser Wahrscheinlichkeit eine von zwei günstigen Situationen ein. In einem Falle liegen die mehreren anregbaren Fluorophore 4 so dicht beieinander, dass sie während der gesamten iterativen Echtzeit-MINFLUX-Lokalisation 33 nicht getrennt werden, das heißt gemeinsam innerhalb des Bereichs des Abtastmusters 9 liegen, in dem mit dem gegebenen Abtastmuster 9 eine MINFLUX-Lokalisation erfolgen kann. Dann wird bei der iterativen Echtzeit-MINFLUX-Lokalisation 33 eine mittlere Lage der anregbaren Fluorophore 4 erhalten. Ein solcher Fall tritt insbesondere dann ein, wenn der Abstand der beitragenden Fluorophore klein gegenüber der Größe der auflösbaren biologischen Strukturen ist. In anderen Fällen liegen die mehreren anregbaren Fluorophore 4 weiter auseinander. Dann geraten bei der Verkleinerung des Anregungsmusters 9 außen liegende anregbare Fluorophore 4 in einen Bereich, in dem die Intensität des Anregungslichts oder die Menge an Anregungslicht, mit dem sie tatsächlich beaufschlagt werden, sehr groß ist. Dies führt dazu, dass diese außen liegenden Fluorophore, wenn sie, wie es üblich ist, entsprechende schaltbare Fluorophore sind, in einen Dunkelzustand versetzt werden, sodass sie anschließend nicht mehr zum Fluoreszenzsignal beitragen, sodass schließlich nur noch ein vereinzeltes anregbares Fluorophor 4 oder dicht beieinander liegende anregbare Fluorophore 4 lokalisiert werden.

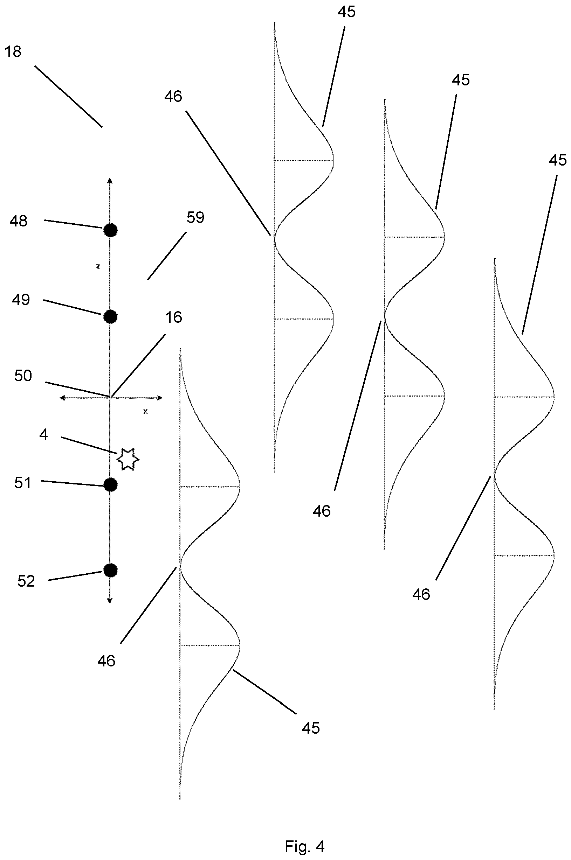

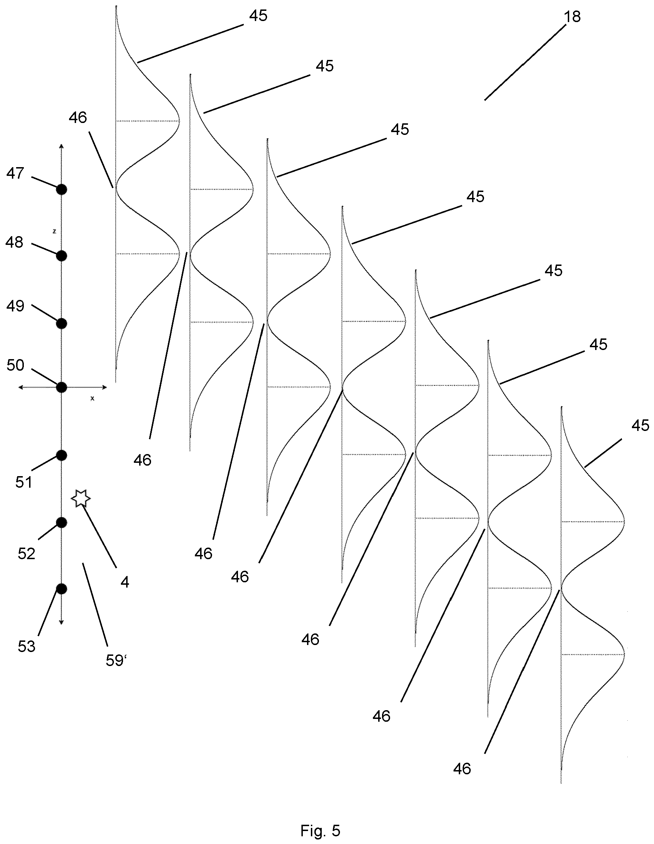

An die laterale Vorlokalisation 17 kann sich eine axiale Vorlokalisation 18 anschließen. Besonders vorteilhafte Verfahren zur Durchführung einer axialen Vorlokalisation 18 sind in den Figuren 4 und 5 dargestellt und werden im Zusammenhang mit diesen erläutert werden. Das in Figur 3 dargestellte Verfahren geht aber davon aus, dass die axiale Lage des anregbaren Fluorophors 4 schon ohne eine axiale Vorlokalisation 18 mit einer hinreichenden Genauigkeit bekannt ist, um ohne eine axiale Vorlokalisation 18 eine MINFLUX-Lokalisation durchführen zu können. Eine solche Situation kann beispielsweise gegeben sein, wenn die zu untersuchende Probe dünn ist oder wenn beim Auffinden 1 gerade solche anregbaren Fluorophore 4 aufgefunden werden, die erst während des Auffindens 1 mittels Aktivierungslichts, insbesondere kurzwelligen Aktivierungslichts, aktiviert wurde oder auch dann, wenn eine Aktivierung mittels seitlich eingestrahlter dünner Lichtblätter erfolgt. Dann kann sich an die laterale Vorlokalisation 17 unmittelbar eine iterative Echtzeit-MINFLUX-Lokalisation 33 anschließen. Im Unterschied zu den aus dem Stand der Technik bekannten Verfahren erfolgt bei dieser Ausführungsform der erfindungsgemäßen iterativen Echtzeit-MINFLUX-Lokalisation 33 eine MINFLUX-Lokalisation mittels eines Intensitätsprofils mit einem in allen drei Ortsrichtungen von Intensitätsanstiegsbereichen umgebenen lokalen, zentralen Intensitätsminimum, hier konkret einem 3D-Anregungsdonut 8, wobei aber dennoch eine laterale MINFLUX-Lokalisation 30,30',30" getrennt von einer axialen MINFLUX-Lokalisation 40,40',40" in der axialen Ortsrichtung 7, das heißt in einer zeitlichen Abfolge nacheinander durchgeführt werden. Dabei wird erfindungsgemäß die bei einer lateralen MINFLUX-Lokalisation 30,30',30" erhaltene Information dann, wenn eine axiale MINFLUX-Lokalisation 40,40',40" der nächste Schritt ist, genutzt, um die axialen Probepositionen, das heißt die Positionen 15,15', optimal im Hinblick auf die Ausnutzung der in diesem nächsten Schritt zu detektierenden Fluoreszenzphotonen enthaltene Information zu platzieren. Umgekehrt wird die bei einer axialen MINFLUX-Lokalisation 40,40',40" erhaltene Information dann, wenn eine laterale MINFLUX-Lokalisation 30,30',30" der nächste Schritt ist, genutzt, um die axialen Probepositionen 31, insbesondere das Zentrum des Abtastmusters 9, optimal im Hinblick auf die Ausnutzung der in diesem nächsten Schritt zu detektierenden Fluoreszenzphotonen enthaltene Information zu platzieren.

Bei der in Figur 3 dargestellten Ausführungsform wird für eine erste axiale MINFLUX-Lokalisation 40 ein 3D-Anregungsdonut 8, der günstigerweise identisch mit dem bei der lateralen Vorlokalisation 17 verwendeten 3D-Anregungsdonut 8 ist, an zwei Positionen 15,15' platziert, die entlang einer Senkrechten zur Fokusebene der lateralen Vorlokalisation 17, der eine unterhalb und der andere oberhalb der Fokusebene, liegen. Die Lage der Senkrechten in der ersten Ortsrichtung 5 und der zweiten Ortsrichtung 6 entspricht dabei der bei der lateralen Vorlokalisation 17 bestimmten lateralen Lage des anregbaren Fluorophors 4, die im Regelfall nicht exakt der tatsächlichen lateralen Lage des anregbaren Fluorophors 4 entspricht. Der axiale Abstand ist dabei so gewählt, dass aus den zu den beiden Positionen 15,15' gemessenen Fluoreszenzwerten eine axiale Lage des anregbaren Fluorophors 4 bestimmt werden kann. Ein entsprechender Schritt ist aus dem Stand der Technik bekannt und ist in Figur 2 als axiale Vorlokalisation 18 beschrieben. Hierfür wird die untere Position 15 so gewählt, dass sie mit hinreichender Sicherheit, beispielsweise mit einer Wahrscheinlichkeit von etwa 90 % oder mehr, unterhalb der tatsächlichen axialen Lage des anregbaren Fluorophors 4 liegt und entsprechend die obere Position 15' oberhalb dieser axialen Lage. Der maximale Abstand beider Positionen 15,15' zueinander, der für eine MINFLUX-Lokalisation geeignet ist, ergibt sich daraus, dass das anregbare Fluorophor 4 idealerweise jeweils nah am zentralen Minimum des 3D-Anregungsdonuts 8 liegen soll und jedenfalls nicht von einem Bereich des 3D-Anregungsdonuts 8 mit maximaler Intensität oder einem Bereich, der weiter vom zentralen Minimum beabstandet ist als ein erstes lokales axiales Maximum des 3D-Anregungsdonuts 8, beaufschlagt werden soll. Aus den an den Positionen 15,15' gemessenen Anzahlen von Photonen oder Intensitäten wird eine axiale Lage des anregbaren Fluorophors 4 bestimmt. Anschließend erfolgt eine laterale MINFLUX-Lokalisation 30. Hierfür wird der 3D-Anregungsdonut 8 in einer Ebene senkrecht zur optischen Achse an sechs auf einem Kreis, dessen Zentrum der bei der lateralen Vorlokalisation 17 bestimmten Lage des anregbaren Fluorophors 4 entspricht, regelmäßig angeordneten lateralen Probepositionen 31 platziert. Die Ebene der lateralen Probepositionen wird so gelegt, dass ihre axiale Lage der bei der axialen MINFLUX-Lokalisation 40 bestimmten Lage des anregbaren Fluorophors 4 entspricht. Hierdurch wird gewährleistet, dass das laterale Intensitätsprofil des 3D-Anregungsdonuts 8 ein möglichst ausgeprägtes lokales Intensitätsminimum aufweist, dass für eine laterale MINFLUX-Lokalisation 30 gut geeignet ist. Das in diesem Schritt genutzte Abtastmuster weist gerade keine Probepositionen außerhalb der Ebene der lateralen Probepositionen 31 auf. In der dargestellten Ausführungsform schließt sich an diese laterale MINFLUX-Lokalisation 30 wieder eine axiale MINFLUX-Lokalisation 40' an, die entsprechend der ersten axialen MINFLUX-Lokalisation 40 durchgeführt wird; die axialen Positionen 15,15', an denen bei dieser axialen MINFLUX-Lokalisation 40' der 3D-Anregungsdonut 8 platziert wird, werden so gewählt, dass die Mitte zwischen den beiden Positionen 15,15' in axialer Richtung der bei der früheren axialen MINFLUX-Lokalisation 40 erhaltenen axialen Lage des anregbaren Fluorophors 4 entspricht, und so, dass ihre laterale Lage der in der vorangehenden lateralen MINFLUX-Lokalisation 30 erhaltenen Lage des anregbaren Fluorophors 4 entspricht. In der dargestellten Ausführungsform schließen sich entsprechend eine weitere laterale MINFLUX-Lokalisation 30', eine weitere axiale MINFLUX-Lokalisation 40" und eine abschließende laterale MINFLUX-Lokalisation 30" an. Alle Lokalisationen werden in Echtzeit nach dem MINFLUX-Prinzip unter Verwendung eines geeigneten Schätzers durchgeführt. Wie im Stand der Technik kann und wird sich in vielen Fällen an die iterative Echtzeit-MINFLUX-Lokalisation 33 eine finale Lokalisation 43 anschließen, die im Rahmen einer anschließenden Datenanalyse erhalten wird. Diese ist in dieser Figur nicht dargestellt.

Die Teilung der MINFLUX-Lokalisation in drei Raumrichtungen in axiale MINFLUX-Lokalisationen 40,40',40' und laterale MINFLUX-Lokalisationen 30,30',30' bietet die Möglichkeit, iterativ beispielsweise zwei axiale MINFLUX-Lokalisationen in unmittelbarer Folge durchzuführen. So kann es beispielsweise vorteilhaft sein, nach der ersten axialen MINFLUX-Lokalisation 40 eine zweite axiale MINFLUX-Lokalisation 40' durchzuführen, wobei zwischen den beiden axialen MINFLUX-Lokalisationen 40,40' nur der Abstand zwischen den jeweiligen Positionen 15,15' oder die axiale Lage des Mittelpunkts zwischen den beiden Positionen 15,15' geändert wird, aber nicht die laterale Lage dieser Positionen 15,15'. Dies kann deswegen vorteilhaft sein, weil bei einem mittels einer Vortex-Phasenplatte erzeugten 3D-Anregungsdonut 8 ein radiales Intensitätsprofil stark abhängt von der axialen Lage des radialen Schnitts, während ein axiales Intensitätsprofil 45 weniger von der radialen Lage abhängt. Dies bedeutet, dass es im Hinblick auf die Ausnutzung der in den Fluoreszenzphotonen enthaltenen Information günstig sein kann, zunächst die axiale Lage mit geringer Unsicherheit zu bestimmen, bevor eine laterale MINFLUX-Lokalisation 30 durchgeführt wird. Dass jeweils im Regelfall eine iterative Lagebestimmung auch bei einer Lagebestimmung nur in einer Ortsrichtung günstig ist, wurde in den Publikationen zum Stand der Technik gezeigt.

Im Regelfall beruht bei dem erfindungsgemäßen iterativen MINFLUX-Verfahren 33 jede einzelne Lokalisation auf einer Messung an Probepositionen, die um die vorher abgeschätzte Lage des anregbaren Fluorophors 4 herum liegen, wobei das Abtastmuster gerade keine Probeposition an der Lage des anregbaren Fluorophors 4 enthält. Dies hat den Grund, dass im Allgemeinen gemäß Feststellung des Erfinders eine Echtzeit-Lokalisation ohne eine Messung im Zentrum des Abtastmusters besser gelingt als bei einem Verfahren gemäß der zum Stand der Technik genannten wissenschaftlichen Publikationen. Mit Blick auf das hier beschriebene erfindungsgemäße Verfahren bietet dies auch leichter die Möglichkeit, die MINFLUX-Lokalisation jeweils zu teilen in eine axiale und eine laterale MINFLUX-Lokalisation, da die Messung im Zentrum nicht für eine Kalibrierung einer in Echtzeit durchgeführten Gesamtlokalisation benötigt wird. Dies schließt aber nicht aus, dass auch bei Durchführung eines erfindungsgemäßen Verfahrens in einzelnen Schritten oder in allen Schritten eine Messung auch an einer zentralen Position erfolgt. Diese Messung kann vorteilhaft zu Kontrollzwecken, insbesondere hinsichtlich einer Überprüfung zum Hintergrundsignal, beispielsweise einer Abschätzung der Größe des Hintergrundsignals, oder mit Blick auf eine Erkennung, ob ein oder mehrere anregbare Fluorophore im Erfassungsbereich liegen, durchgeführt werden. Im Regelfall wird die Bestimmung der Lage des anregbaren Fluorophors 4 nicht unmittelbar von diesem Messwert im Zentrum abhängen. Dies soll nicht bedeuten, dass die erfindungsgemäße Trennung der Lokalisation in eine axiale MINFLUX-Lokalisation 40,40',40" und eine laterale MINFLUX-Lokalisation 30,30',30" nicht auch möglich ist, wenn sich die Bestimmung der Lage des anregbaren Fluorophors 4 auch unmittelbar auf eine Messung im Zentrum stützt.

In **Fig. 4** ist ein Ablauf einer axialen Vorlokalisation 18 dargestellt. Für die Vorlokalisation wird ein 3D-Anregungsdonut 8 verwendet, bevorzugt derselbe 3D-Anregungsdonut 8, der anschließend für eine iterative Echtzeit-MINFLUX-Lokalisation 33 verwendet wird. Der 3D-Anregungsdonut 8 weist ein effektives axiales Intensitätsprofil 45 mit einem zentralen lokalen Minimum 46 auf. Das effektive axiale Intensitätsprofil 45 entspricht, wenn nur das Anregungsprofil axial verlagert wird, die Detektionsapertur aber ortsfest bleibt, dem tatsächlichen Intensitätsprofil in der Probe. Wird die Detektionsapertur gemeinsam mit dem Anregungsprofil axial verlagert, so ergibt sich das effektive axiale Intensitätsprofil 45 als ein Produkt aus der Detektions-Punktverbreiterungsfunktion und dem tatsächlichen axialen Intensitätsprofil. In der Praxis sind zudem auftretende Aberrationen zu berücksichtigen.

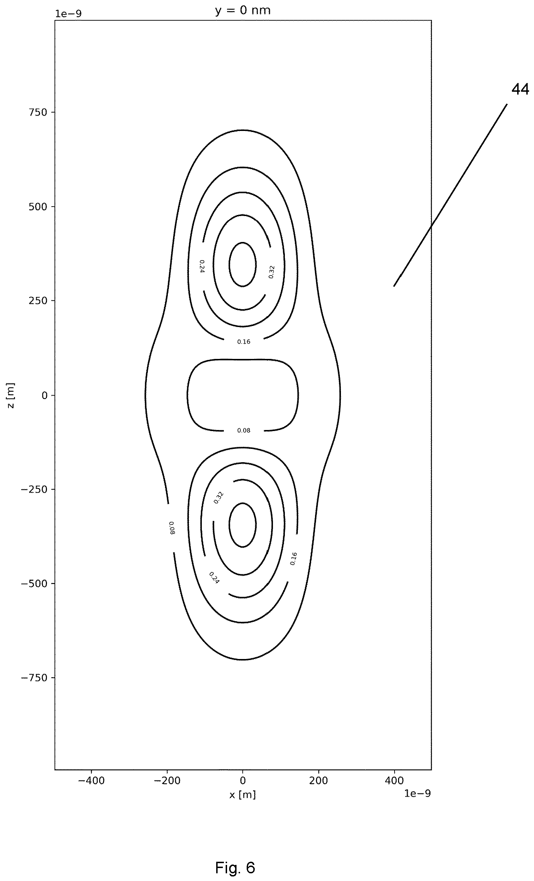

Ein typischer 3D-Anregungsdonut 8 weist in radialer Richtung in der Fokalebene Maxima auf, deren Abstand im Vergleich zu dem entsprechenden Abstand bei einem 2D-Anregungsdonut groß ist, beispielsweise bei einer Anregungs-wellenlänge von 642 nm bei 520 nm liegen kann. Abhängig von der Breite des 3D-Anregungsdonuts 8 sind achsparallele Intensitätsprofile 45 für einen Bereich radialer Abstände zur Achse sehr ähnlich. Für das in Figur 6 als Kontur-Plot dargestellte und im später Folgenden näher erläuterte Beispiel für eine effektive Intensitätsverteilung 44 gilt dies für Abstände bis mehr als ± 100 nm. Auch der Wert im lokalen Minimum steigt innerhalb dieses Bereichs mit größeren Abständen zur Achse nur langsam. Das in Figur 4 dargestellte Verfahren kann angewendet werden, wenn nach dem Auffinden 1 und gegebenenfalls nach einer lateralen Vorlokalisation, die laterale Lage mit einer Unsicherheit, die zu dem oben skizzierten Bereich radialer Abstände passt, und die axiale Lage des angeregten Fluorophors 4 mit einer Unsicherheit von bis etwas mehr als dem halben Abstand der Maxima des effektiven Intensitätsprofils 45 bekannt sind.

Die geschätzte Lage 16 des anregbaren Fluorophors sei bei der axialen Probeposition 50. Dann wird in der dargestellten Ausführungsform der 3D-Anregungsdonut 8 sequenziell an vier axialen Probepositionen entlang der optischen Achse, an die axiale Probeposition 48, die axiale Probeposition 49, die axiale Probeposition 51 und die axiale Probeposition 52 platziert. Die Menge der axialen Probepositionen 48,49,51,52 bildet dabei ein axiales Abtastmuster 59. Eine zentrale axiale Probeposition 50, die der geschätzten Lage 16 des anregbaren Fluorophors entspricht, wird dabei ausgelassen. Die axialen Probepositionen 49 und 51 weisen dabei von der geschätzten Lage 16 des anregbaren Fluorophors 4 einen Abstand auf, der dem Abstand des zentralen lokalen Minimums 46 von einem Maximum des effektiven Intensitätsprofils 45 entspricht, beispielsweise 360 nm, wobei dieser Abstand unter anderem von der Wellenlänge des verwendeten Anregungslichts und vom Brechungsindex der Probe abhängt. Die axialen Probepositionen 48 und 52 weisen von der geschätzten Lage 16 des anregbaren Fluorophors 4 jeweils den doppelten Abstand auf. Aus der Menge der auf diese Weise erhaltenen Fluoreszenzmesswerte kann zuverlässig eine axiale Lage des anregbaren Fluorophors 4 abgeschätzt werden. Wird beispielsweise eine Vektorsumme über die Messwerte gebildet, so ist jeder tatsächlichen Lage des anregbaren Fluorophors 4 ein Schätzwert zugeordnet, wobei ein Schätzwert jeweils nur genau einer Lage zugeordnet ist. Dies wird durch die Wahl der Abstände der axialen Probepositionen zueinander sichergestellt. Die Abstände können auch kleiner gewählt werden, bevorzugt aber nicht größer. Die konkret angegeben Abstände sind insofern eine besonders gute Wahl, weil bei ihnen der Fangbereich, das heißt der Bereich, in dem ein Fluorophor gelegen sein muss, damit es mit dem Verfahren lokalisiert werden kann, im Verhältnis zu der Zahl der Abtastpunkte sehr groß ist. Wegen der Eindeutigkeit der Zuordnung kann über eine Kalibrierung beispielsweise mittels einer Simulationsrechnung die Vektorsumme so mittels einer Korrekturfunktion modifiziert werden, dass der erhaltene Schätzer die tatsächliche Lage des anregbaren Fluorophors 4 ohne einen Bias abschätzt. In Abwesenheit von Hintergrundfluoreszenz würden für eine axiale Lokalisation eines einzigen vorhandenen anregbaren Fluorophors prinzipiell zwei axiale Probepositionen ausreichen, die weit auseinanderliegen sollten. Praktisch ist es aber notwendig, das zu lokalisierende Fluorophor im Verhältnis zum Hintergrund während des Lokalisationsprozesses vergleichsweise stark anzuregen. Dies wird mittels der gewählten vier Abtastpositionen erreicht. Ein Fluorophor, welches tatsächlich die geschätzte Lage 16 aufweist, wird beispielweise mit Intensitätsmaxima der an den axialen Probepositionen 49 und 51 platzierten 3D-Anregungsdonuts 8 erfasst. Mit zunehmender Entfernung von dieser Lage steigt dann die Anregungsintensität, die das anregbare Fluorophor 4 von einem der beiden weiter beabstandeten 3D-Anregungsdonuts 8 erfährt.

In **Fig. 5** ist ein Ablauf einer weiteren axialen Vorlokalisation 18 dargestellt. Bei dieser muss nicht die bei dem vorangehend beschriebenen Verfahren gestellte Anforderung an die Vorkenntnis über die axiale Lage des anregbaren Fluorophors 4 erfüllt sein. Das Verfahren ist daher beispielsweise besonders geeignet, um anregbare Fluorophore 4 zu lokalisieren, die mittels eines Weitfeldlokalisationsverfahrens mit geringer Schärfentiefe lateral vorlokalisiert wurden.

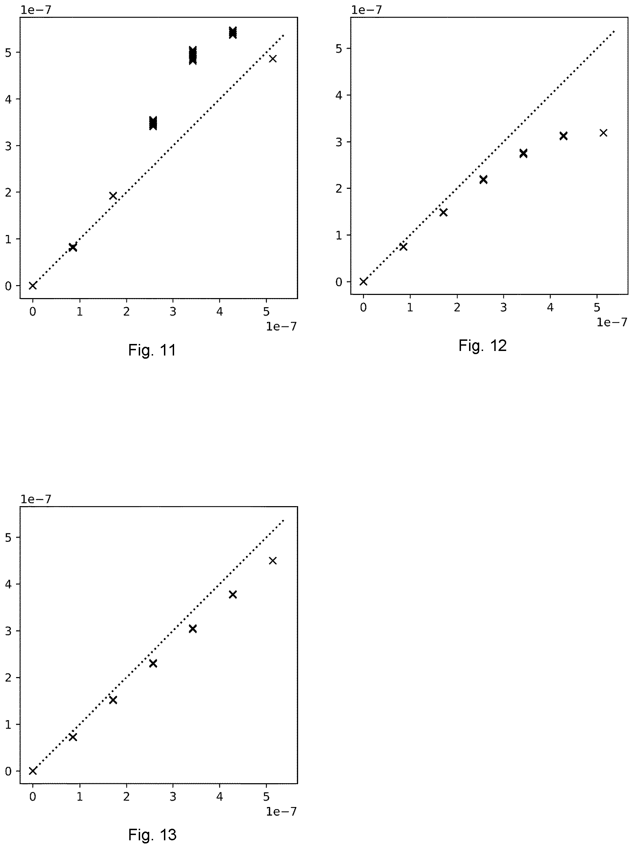

Auch bei diesem Verfahren weisen axiale Probepositionen zueinander Abstände auf, die dem Abstand des zentralen lokalen Minimums 46 von einem Maximum des effektiven Intensitätsprofils 45 entsprechen. Auch hier sind die gewählten Abstände besonders geeignete Abstände, grundsätzlich können aber auch kleinere Abstände gewählt werden. Die zentrale axiale Probeposition 50, die der geschätzten Lage des anregbaren Fluorophors 4 entsprechen kann, wird bei diesem Verfahren nicht ausgelassen. Die Anzahl der axialen Probepositionen ist mindestens sechs, konkret dargestellt sind sieben, die Anzahl kann aber größer gewählt werden. Grenzen werden hierbei gesetzt durch die apparativen Möglichkeiten, den Anregungsfokus in axialer Richtung relativ zur Probe zu verschieben, sowie durch auftretende optische Aberrationen. Durch eine ungerade Anzahl von axialen Probepositionen 47-53 und die Lage einer zentralen axialen Probeposition 50 an der geschätzten Lage 16 des anregbaren Fluorophors 4 wird erreicht, dass der Fangbereich, innerhalb dessen eine axiale Lokalisation erfolgen kann, symmetrisch zu der geschätzten Lage 16 des anregbaren Fluorophors 4 ist. Eine eindeutige Bestimmung der axialen Lage des anregbaren Fluorophors 4 ist mit diesem Verfahren jedenfalls dann möglich, wenn in beiden Richtungen von der tatsächlichen Lage des anregbaren Fluorophors 4 zwei axiale Probepositionen liegen; Berechnungen für das axiale Abtastmuster 59', das durch die Menge aller axialen Probepositionen 47 bis 53 gebildet ist, deren Ergebnisse in Figur 13 dargestellt sind, zeigen, dass der Fangbereich sogar größer ist. Im konkret dargestellten Beispiel kann ein anregbares Fluorophor also jedenfalls immer dann zuverlässig lokalisiert werden, wenn es sich tatsächlich innerhalb des Bereichs zwischen den axialen Probepositionen 48 und 52 befindet. Im dargestellten Fall befindet sich das anregbare Fluorophor 4 direkt zwischen den axialen Probepositionen 51 und 52. Eine axiale Lokalisation kann wieder mittels einer kalibrierten Vektorsumme erfolgen.

Bei einer einfachen Realisierung kann zweistufig vorgegangen werden, indem zunächst die axiale Lage grob bestimmt wird und anschließend die genauere Lagebestimmung durchgeführt wird, indem eine Vektorsumme aus den Messwerten zu vier der axialen Probepositionen durchgeführt wird, die so gewählt sind, dass die für diese Auswertung genutzte Anordnung der in Figur 4 dargestellten entspricht. Der Messwert zu einer axialen Probeposition, die der grob abgeschätzten Lage des anregbaren Fluorophors 4 benachbart ist, wird dann nicht ausgewertet, während die dann übrig bleibenden nächsten beiden Nachbarn in jeder axialen Richtung ausgewertet werden; im dargestellten Fall würden also die axialen Probepositionen 49, 50, 52 und 53 ausgewertet. Sofern die Grobabschätzung uneindeutig dahingehend ist, ob das anregbare Fluorophor 4 knapp oberhalb oder unterhalb einer axialen Probeposition, zum Beispiel der axialen Probeposition 51 gelegen ist, so ist dies unschädlich. Es wird dann genau diese Probeposition, im beschriebenen (nicht dargestellten) Beispiel die axiale Probeposition 51, bei der genaueren axialen Lokalisation nicht betrachtet. Es kann allgemein die Probeposition bei der genaueren Lokalisation außer Betracht gelassen werden, die der grob bestimmten Lage des anregbaren Fluorophors am nächsten liegt.

Die Verlagerung des 3D-Anregungsdonuts 8 an die axialen Probepositionen 47-53 kann jeweils, sowohl bei in Zusammenhang mit Figur 4 als auch bei in Zusammenhang mit Figur 5 erläuterten Ausführungsformen, einerseits derart erfolgen, dass jeweils auch die Projektion der Lochblende oder allgemein von Strukturen in der Detektionsebene in die Probe gemeinsam mit dem 3D-Anregungsdonut 8 verlagert wird oder andererseits gerade so, dass die Projektion der Lochblende oder von Strukturen in der Detektionsebene fest in der Ebene des geschätzten Lage 16 des anregbaren Fluorophors 4 verbleibt. Denkbar sind auch Lösungen, bei denen die Projektion der Lochblende oder von Strukturen in der Detektionsebene in einem anderen Maß verlagert wird als der 3D-Anregungsdonut 8. Wird nur der 3D-Anregungsdonut 8 verlagert, so ist für die Bestimmung der Abstände der axialen Probepositionen, das heißt für die Festlegung der axialen Probepositionen das tatsächliche Intensitätsprofil des Anregungslichts in der Probe maßgeblich. Wird die Projektion der Lochblende oder von Detektionsstrukturen in der Detektionsebene wie beispielsweise Detektorelementen eines ein Beugungsbild örtlich auflösenden Detektors gemeinsam mit dem 3D-Anregungsdonut 8 verlagert, so ist das effektive Intensitätsprofil 45 maßgeblich, das sich aus einem Produkt des tatsächlichen Intensitätsprofils des Anregungslichts mit einer Punktspreizfunktion der Detektion ergibt.

Insbesondere wenn die Abstände der axialen Abtastpositionen 47-53 kleiner als in den dargestellten Beispielen und somit mehr Abtastpunkte im Verhältnis zum Fangbereich gewählt werden, ist es nicht nötig, dass eine zentrale axiale Abtastposition 50 vorhanden ist, die mit der geschätzten Lage 16 des anregbaren Fluorophors zusammenfällt.

In vielen Fällen kann durch Wiederholung des MINFLUX-Lokalisations-Schritts oder der MINFLUX-Lokalisations-Schritte mit dem oder den kleinsten Abtastmustern 9 eine hochgenaue Lokalisation, das heißt eine hochgenaue Bestimmung der Lage der anregbaren Fluorophore 4, mehrfach durchgeführt werden. Das bedeutet, das Verfahren kann iterativ durchgeführt werden, wobei insbesondere bei kleinen Abtastmustern 9 auf eine weitere Verkleinerung des Abtastmusters 9 von einem Schritt zum nächstfolgenden Schritt, in dem eine Lokalisation in derselben Orientierung, also lateral oder axial, durchgeführt wird, verzichtet wird. In vielen Fällen wird dennoch in den später durchgeführten Schritten eine geringere Unsicherheit der Lagebestimmung erreicht.

In **Fig. 6** ist ein Kontur-Plot eines Schnitts einer berechneten effektiven Intensitätsverteilung 44 eines 3D-Anregungsdonuts 8 dargestellt. Für die Berechnung wurde vorausgesetzt, dass das zentrale Minimum des 3D-Anregungsdonuts 8 sowohl axial als auch lateral gemeinsam mit der Detektionsapertur verlagert wird, sodass die Detektionsapertur und das zentrale Minimum immer konfokal zueinander angeordnet sind. Weiter wurde eine Anregungswellenlänge von 642 nm und ein bestimmter, hier nicht näher spezifizierter Durchmesser der Detektionsapertur, das heißt einer konfokalen Lochblende, angenommen. Für die gewählten Parameter liegt der tatsächliche Abstand der lateralen Maxima des 3D-Anregungsdonuts 8 bei etwa 520 nm, während er in der dargestellten effektiven Intensitätsverteilung 44 bei etwa 400 nm liegt. Diese lateralen Maxima sind dem dargestellten Kontur-Plot nicht zu entnehmen, einfach weil zu dem zugehörigen Maxima-Wert im axialen Schnitt keine geschlossene Kontur existiert. Im Kontur-Plot ist zu erkennen, dass eine zentrumsnahe Linie gleicher effektiver Intensität annähernd die Form eines Rechtecks mit gerundeten Ecken aufweist. Oberhalb und unterhalb schließen sich Bereiche mit eiförmigen Linien gleicher effektiver Intensität an. Anhand des Kontur-Plots kann weiter erkannt werden, dass ein axiales Intensitätsprofil zwei ausgeprägte Maxima aufweist. Es kann erkannt werden, dass Intensitätsprofile zu radial verlagerten Parallelen zur Achse ein ausgeprägtes Minimum aufweisen und jeweils zwei plateauartigen Maxima-Bereiche, wobei das Zentrum des Plateaus in axialer Richtung nahezu an derselben Position ist wie das Maximum auf der Achse. Dies gilt für einen Bereich von etwa $\pm$ 100 nm. Für den praktisch relevanteren Fall, dass die Detektionsapertur in lateraler, das heißt radialer Richtung ortsfest ist, wenn der 3D-Anregungsdonut 8 für die axiale Vorlokalisation 18 axial verlagert wird, so ist dieser Bereich, in dem axiale effektive Intensitätsprofile 45 die oben genannten Eigenschaften aufweisen, tatsächlich breiter. Entsprechendes gilt, wenn eine sehr große Detektionsapertur, das heißt wenn keine konfokale Detektion genutzt wird. Sofern die laterale Lage eines anregbaren Fluorophors 4 mit einer der Breite des Bereichs entsprechenden Unsicherheit bekannt ist, kann es mittels des 3D-Anregungsdonuts 8 axial vorlokalisiert werden.

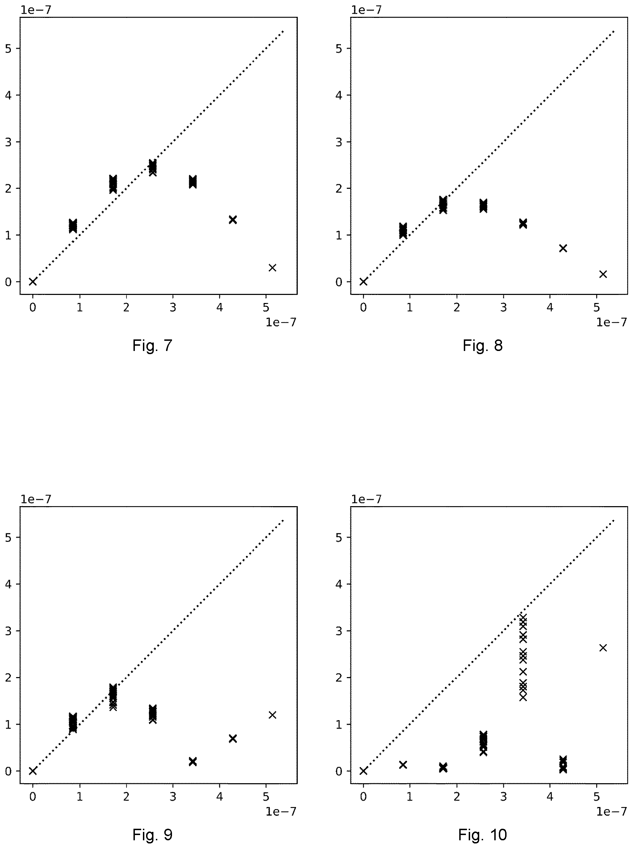

In **Fig. 7** bis **Fig. 10** sind Ergebnisse verschiedener Simulationsrechnungen zur axialen Vorlokalisation 18 unter Verwendung eines 3D-Anregungsdonuts 8 dargestellt. Hierbei ist jeweils das Ergebnis der Berechnung der axialen Koordinate einer Vektorsumme aus Photonenanzahlen oder Fluoreszenzintensitäten $p_j$, die für verschiedene Abtastpositionen $\vec{b}_j$, unter den jeweils angenommenen Messbedingungen als Messwerte zu erwarten sind, über der angenommenen axialen Position des anregbaren Fluorophors aufgetragen. Die Vektorsumme kann geschrieben werden als

$$\vec{u}\left(p_j, \vec{b}_j\right) = \frac{\sum_{j=1}^{m} p_j \cdot \vec{b}_j}{\sum_{j=1}^{m} p_j} .$$

Für alle axialen Koordinaten, für die eine Berechnung durchgeführt wurde, wurden dabei jeweils Berechnungen für mehrere radiale Koordinaten innerhalb eines Bereichs, der radialen Abständen zur optischen Achse von 0 bis 100 nm entspricht, durchgeführt. Zu jedem Wert der Abszisse werden folglich mehrere Werte der Ordinate bestimmt, wobei die berechneten Werte auch sehr dicht aufeinanderfallen können. Für den Abszissenwert 0 fallen die Werte aus Symmetriegründen grundsätzlich exakt aufeinander. Die Skala der Achsen ist $10^{-7}$ m, das heißt $10^2$ nm, ein Wert von 1 entspricht also folglich 100 nm.

Der Darstellung der **Fig. 7** liegt nun ein angenommenes axiales Abtastmuster mit zwei Abtastpunkten, an denen das zentrale lokale Minimum des 3D-Anregungsdonuts 8 platziert wird, jeweils im Abstand von 256 nm ober- und unterhalb eines Zentrums zu Grunde. Dieser Abstand entspricht etwa einem Viertel des Abstands der Maxima eines axialen Intensitätsprofils eines der Simulation zu Grunde gelegten 3D-Anregungsdonuts 8. Weiter wurden Beobachtungsbedingungen angenommen, unter denen die effektive Intensitätsverteilung 44 mit der tatsächlichen Intensitätsverteilung in der Probe übereinstimmt. Unter diesen Bedingungen kann nicht zwischen Lagen eines Fluorophors unterschieden werden, die näher als etwa 260 nm oder weiter als 260 nm vom Zentrum entfernt sind. Eine axiale Lokalisation oder axiale Vorlokalisation 18 auf Basis einer einfachen Vektorsumme ist daher auf Basis des angenommenen axialen Abtastmusters und der angenommenen Ausgangsbedingungen nur möglich, wenn die axiale Lage des anregbaren Fluorophors vorab auf besser als etwa $\pm$ 260 nm bekannt ist. Dieser Bereich, innerhalb dessen eine eindeutige Lokalisation möglich ist, wird in der Folge als Fangbereich oder Fangbereich des axialen Abtastmusters bezeichnet.

Der Darstellung der **Fig. 8** liegt nun ein angenommenes axiales Abtastmuster mit drei Abtastpunkten zu Grunde. Zusätzlich zu den Abtastpunkten des axialen Abtastmuster der Fig. 7 enthält das hier zu Grunde liegende axiale Abtastmuster noch einen Abtastpunkt im Zentrum. Es ist in der Auftragung zu erkennen, dass der Fangbereich dieses axialen Abtastmusters für eine Auswertung auf Basis einer einfachen Vektorsumme kleiner ist als der eines axialen Abtastmusters mit nur zwei Abtastpunkten.

Der Darstellung der **Fig. 9** liegt nun ein angenommenes axiales Abtastmuster mit zwei Abtastpunkten zu Grunde, das dem axialen Abtastmuster der Figur 7 entspricht. Die Simulation wurde hinsichtlich der Beobachtungsbedingungen modifiziert, insofern, dass eine Beobachtung mittels einer mit dem 3D-Anregungsdonut 8 axial mit verschobenen konfokalen Lochblende angenommen wurde. Hierbei wird ein effektives axiales Intensitätsprofil 45 wirksam, dessen Maxima-Abstand gegenüber dem der Simulation für Fig. 7 zu Grunde gelegten Intensitätsprofil verringert ist. Dementsprechend wurden nun für Fig. 9 Abtastpunkte im Abstand von jeweils 180 nm zu einem Zentrum angenommen. Der Verlauf der Datenkurve entspricht einem verkleinerten Verlauf der Datenkurve aus Fig. 7 ergänzt um einen in Fig. 7 nicht enthaltenen Abschnitt. Der Fangbereich ist entsprechend der Veränderung des effektiven axialen Intensitätsprofils 45 gegenüber dem für Fig. 7 zu Grunde gelegten Intensitätsprofil auf etwa $\pm$ 180 nm verringert.

Der Darstellung der **Fig. 10** liegen nun ebenfalls ein angenommenes axiales Abtastmuster mit zwei Abtastpunkten und Beobachtungsbedingungen wie für Fig. 9 zu Grunde, der Abstand der beiden Abtastpunkte zum Zentrum wurde aber auf das Doppelte, das heißt auf 360 nm vergrößert. Die beiden Abtastpunkte weisen somit zueinander einen Abstand auf, der dem Abstand der Maxima des effektiven axialen Intensitätsprofils 45 des 3D-Anregungsdonuts 8 entspricht. Der Darstellung kann entnommen werden, dass dieses axiale Abtastmuster nicht geeignet ist, um auf Basis einer Vektorsumme ein Fluorophor zu lokalisieren, da insbesondere für Fluorophore, die nahe am Zentrum des axialen Abtastmusters gelegen sind, die aus der Vektorsumme erhaltenen Werte nur schwach von der tatsächlichen Lage des Fluorophors abhängen.

In **Fig. 11** bis **Fig. 13** sind Ergebnisse verschiedener Simulationsrechnungen zur axialen Vorlokalisation 18 mit erweitertem Fangbereich unter Verwendung eines 3D-Anregungsdonuts 8 dargestellt. Alle drei Darstellungen richten sich auf Beobachtungsbedingungen wie für Fig. 9 angenommen, also mit einer axial mitbewegten konfokalen Lochblende oder einem äquivalenten Detektionsschema. Anhand von Figur 10 wurde gezeigt, dass eine relevante Erweiterung des axialen Fangbereichs gegenüber dem aus dem Stand der Technik bekannten axialen Fangbereich, der ungefähr dem Fangbereich nach Figur 9 entspricht, nicht einfach möglich ist, indem die Abtastpunkte, deren Messwerte ratiometrisch ausgewertet werden, in einen größeren Abstand zueinander gebracht werden. Der Erfinder hat nun festgestellt, dass mittels einer Abtastung der Probe in axialer Richtung mit einem 3D-Anregungsdonut 8 auf überraschend einfache Weise eine genaue axiale Vorlokalisation 18 innerhalb eines erweiterten axialen Fangbereichs 61 erreicht werden kann. Hierfür wird eine Abtastung mit axialen Probepositionen gewählt, deren Abstand zueinander nicht größer ist als der halbe Abstand der Maxima des effektiven Intensitätsprofils 45, wobei an einer zentralen Probeposition kein Abtastpunkt liegen muss, sodass der Abstand zweier zentraler axialer Abtastpositionen dem Abstand der Maxima des effektiven axialen Intensitätsprofils 45 entsprechen kann. Konkrete Beispiele auch zu der Auswertung der bei einer Abtastung erhaltenen Daten sind weiter oben bereits anhand der Figuren 4 und 5 erläutert worden.

Das für **Fig. 11** angenommene axiale Abtastmuster entspricht dem axialen Abtastmuster, welches für Fig. 10 angenommen wurde, ergänzt um jeweils einen weiteren Abtastpunkt ober- und unterhalb im Abstand von 360 nm, das heißt dem halben Abstand der Maxima des effektiven axialen Intensitätsprofils 45 des 3D-Anregungsdonuts 8; das axiale Abtastmuster weist folglich vier Abtastpunkte auf, von denen zwei im Abstand von 360 nm oberhalb und unterhalb des Zentrums des axialen Abtastmusters und zwei weitere im Abstand von 720 nm oberhalb und unterhalb des Zentrums des axialen Abtastmusters liegen. Dieses der Simulation zu Grunde gelegte Abtastmuster entspricht somit dem axialen Abtastmuster 59, das in Figur 4 dargestellt ist. Der axiale Fangbereich 61 dieses axialen Abtastmusters 59 für eine Auswertung auf Basis einer Vektorsumme beträgt etwa ± 400 nm, das bedeutet, dass Fluorophore auch dann noch eindeutig lokalisiert werden können, wenn sie bis etwa 10% des Abtastpunktabstands außerhalb des Bereichs zwischen den inneren Abtastmusterpunkten liegen. Daran, dass die zu den einzelnen Abszissenwerten gehörenden Punktwolken insbesondere am Rand des Fangbereichs einen etwas breiteren Wertebereich umfassen, ist zu erkennen, dass der aus der Vektorsumme erhaltene axiale Wert für eine gegebene axiale Lage eines Fluorophors von der lateralen Lage des Fluorophors abhängt. Die grundsätzliche Abweichung der aus der Vektorsumme erhaltenen axialen Lage von der zu Grunde liegenden axialen Lage kann durch eine Kalibrationskurve ausgeglichen werden, sodass nach der Kalibration der aus der Vektorsumme erhaltene Wert die tatsächliche Lage des Fluorophors ohne einen systematischen Fehler widerspiegelt. Die Abhängigkeit von der lateralen Lage führt zu einer Unsicherheit der axialen Lokalisation. Die große Steigung der Kurve, das heißt, dass die Vektorsumme die axialen Abstände zum Zentrum des axialen Abtastmusters 59 überschätzt, ist dagegen günstig, da dies bedeutet, dass die Vektorsumme empfindlich auf eine Änderung der Lage des Fluorophors reagiert.

Für **Fig. 12** wurde ein axiales Abtastmuster zu Grunde gelegt, das aus dem für Fig. 11 zu Grunde gelegten durch Ergänzung eines Abtastpunktes im Zentrum hervorgeht. Der Fangbereich dieses axialen Abtastmusters ist sogar über ± 500 nm ausgedehnt, wobei die Empfindlichkeit auf die Lage des Fluorophors ab etwa ± 400 nm zum Rand hin allerdings nur gering ist. Dieses axiale Abtastmuster weist den Vorteil auf, dass innerhalb des untersuchten radialen Bereichs von ± 100 nm die aus der Vektorsumme erhaltene axiale Position keine in der Darstellung der Daten sichtbare Abhängigkeit von der radialen Lage des Fluorophors zeigt.

Für **Fig. 13** wurde ein axiales Abtastmuster zu Grunde gelegt, das aus dem für Fig. 12 zu Grunde gelegten durch Ergänzung je eines weiteren Abtastpunktes an den Rändern hervorgeht. Das so erhaltene axiale Abtastmuster entspricht somit dem in Figur 5 dargestellten axialen Abtastmuster 59'. Die Simulation belegt, dass der Fangbereich dieses axialen Abtastmusters den vollen Bereich, für den Simulationsrechnungen durchgeführt wurden, das heißt von mehr als ± 500 nm, umfasst. Auf Grund der grundsätzlichen Überlegungen, die im Zusammenhang mit Figur 5 dargelegt sind, ist davon auszugehen, dass der Fangbereich tatsächlich zumindest etwa ± 720 nm beträgt. Auf Grund der Simulationsergebnisse, die in Fig. 12 dargestellt sind, darf weiter angenommen werden, dass der Fangbereich tatsächlich noch größer ist.

Insgesamt zeigen die in den Figuren 11 bis 13 dargestellten Ergebnisse, dass ein 3D-Anregungsdonut 8 überraschend gut geeignet ist für eine axiale Lokalisation eines Fluorophors, dessen laterale Lage mit einer Unsicherheit von mindestens bis zu ± 100 nm bekannt ist.

Die Simulationsrechnungen, die den Darstellungen der Figuren 7 bis 10 und 11 bis 13 zu Grunde liegen, beziehen nicht explizit die Effekte des Photonenrauschens und des Hintergrundsignals ein. Aus anderen Untersuchungen ist der Anmelderin aber bekannt, dass die Vektorsummen jeweils vom Hintergrundsignal abhängen. Dies kann einfach bei

$$\vec{u}(p_j, \vec{b}_j) = \frac{\sum_{j=1}^{m} p_j \cdot \vec{b}_j}{\sum_{j=1}^{m} p_j}$$

Betrachtung der Vektorsumme gesehen werden. Ein Hintergrundsignal, das über das gesamte axiale Abtastmuster zumindest in guter Näherung als konstant angesehen werden kann, führt zwar nicht zu einer Änderung des Vektors im Zähler der obigen Gleichung, aber zu einer Änderung, nämlich einer Vergrößerung, des Nenners. Je größer das Hintergrundsignal ist, umso kleiner wird daher die Länge des berechneten Vektors. Aus diesem Grunde hat die Anmelderin ein Verfahren entwickelt, das eine Korrektur hinsichtlich des Hintergrundsignals während der Durchführung der MINFLUX-Messungen ermöglicht. Dieses Verfahren ist Gegenstand der europäischen Patentanmeldung EP 3 951 470 A1. Gemäß dem in der genannten Patentanmeldung beschriebenen Verfahren wird während der Messung gleitend ein mittleres Hintergrundsignal bestimmt. Dieses Hintergrundsignal wird nun berücksichtigt, indem es im Nenner subtrahiert wird. Hiermit wird eine korrigierte Vektorsumme erhalten, deren Wert nicht mehr systematisch vom Hintergrundsignal abhängt. Die Kalibrierung der Lokalisation kann dann, wie weiter oben schon dargelegt, durch Anwendung einer Kalibrierfunktion erfolgen. Diese kann zum Beispiel durch ein Polynom oder eine Look-Up-Table beschrieben sein.

Der Einfluss des Photonenrauschens hängt unmittelbar von der Anzahl der gemessenen Photonen ab. Diesbezüglich hat die Anmelderin weitere Simulationen durchgeführt, die beispielsweise zeigen, dass mittels des der Figur 12 zu Grunde liegenden Abtastschemas mit fünf Abtastpunkten und axial mitbewegter konfokaler Lochblende bei Detektion von nur 400 Photonen über einen axialen Fangbereich von rund $\pm$ 500 nm für Fluorophore innerhalb eines lateralen Bereichs von je $\pm$ 100 nm in einer ersten und in einer zur ersten orthogonalen zweiten Richtung eine axiale Lokalisation mit einer Unsicherheit zwischen 20 nm und 35 nm, je nach Lage des Fluorophors innerhalb des betrachteten Volumens, erreicht wird. Dies reicht sicher aus, um anschließend beispielsweise eine iterative Echtzeit-MINFLUX-Lokalisation in drei Dimensionen durchführen zu können.

Weiter ist der Anmelderin aus Experimenten bekannt, dass insbesondere für ein axiales Abtastmuster mit fünf Punkten wie für Fig. 12 zu Grunde gelegt, eine Abweichung der tatsächlichen Abtastmusterabstände von den den Simulationen zu Grunde gelegten toleriert werden kann. So treten in realen Proben Aberrationen auf, die zu Verzeichnungen der effektiven axialen Intensitätsprofile 45 führen. Diese Verzeichnungen sind abhängig von der betrachteten axialen Position. Trotzdem gelingt es der Anmelderin mit den genannten Verfahren zur axialen Vorlokalisation 18, insbesondere in Verbindung mit einer Korrektur der Aberrationen, Fluorophore axial hinreichend genau vorzulokalisieren, um anschließend eine iterative Echtzeit-MINFLUX-Lokalisation 33 in drei Dimensionen durchzuführen.

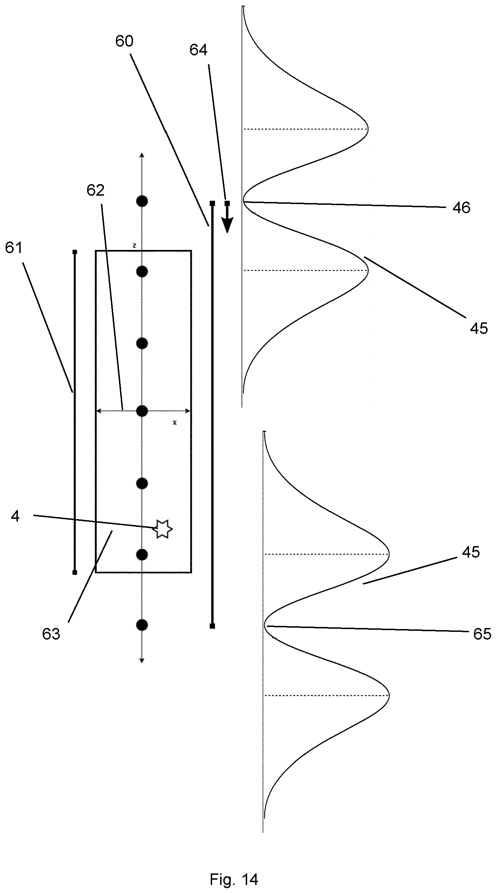

**Fig. 14** illustriert eine weiteres Abtastverfahren zur axialen Vorlokalisation 18 mit Verwendung eines 3D-Anregungsdonuts 8. Während die anhand der Figuren 4 und 5 erläuterten Verfahren auf einem diskreten Abtastmuster mit einem möglichst großen Abstand, um mit wenigen Abtastpunkten einen möglichst großen axialen Fangbereich 61 zu erzielen, beruhen, stützt sich dieses Verfahren auf eine feiner gerasterte oder kontinuierliche Abtastbewegung. Mit dem 3D-Anregungsdonut 8 wird ein axialer Abtastbereich 60 abgetastet, wobei das zentrale lokale Minimum 46 des effektiven axialen Intensitätsprofils 45 den gesamten axialen Abtastbereich überstreicht. Hierbei kann die Verschiebung 64 des zentralen lokalen Minimums 46 in diskreten Schritten oder kontinuierlich erfolgen. Der axiale Abtastbereich 60 ist hierbei gemäß einem Aspekt der Erfindung größer als der Abstand der Maxima des axialen effektiven Intensitätsprofils 45. Bei dem in Figur 4 dargestellten Verfahren ist der axiale Abtastbereich 60 (der dort aus Gründen der Übersichtlichkeit nicht ausdrücklich vermerkt ist) doppelt so groß wie der Abstand der Maxima des axialen Intensitätsprofils 45, bei den in den Figuren 5 und 14 dargestellten ist er dreimal so groß wie der der Abstand der Maxima des axialen Intensitätsprofils 45. Aus dem axialen Abtastbereich 60 ergibt sich ein axialer Fangbereich 61. Ein anregbares Fluorophor 4 kann nun jedenfalls dann axial vorlokalisiert werden, wenn es sich innerhalb eines Vorlokalisationsvolumens 63 befindet, welches sich hier als Quader oder Zylinder aus einem lateralen Vorlokalisationsbereich 62 und dem axialen Fangbereich 61 ergibt. Der laterale Vorlokalisationsbereich 62 hängt ab von der effektiven Intensitätsverteilung 44, für die ein Beispiel in Figur 6 gezeigt ist. Er kann, wie aus weiter oben erläutertem folgt, ein Quadrat mit einer Kantenlänge von zweimal 100 nm oder eine Kreisfläche mit einem Radius von mehr als 100 nm umfassen. Erfolgt die Abtastbewegung kontinuierlich, können jeweils während eines Teils der Abtastbewegung detektierte Photonen kumuliert erfasst und dem überstrichenen Bereich zugeordnet werden. Die Bestimmung der axialen Lage kann nun auch hier besonders einfach durch Auswertung einer Vektorsumme

$$\vec{u}(p_j, \vec{b}_j) = \frac{\sum_{j=1}^{m} p_j \cdot \vec{b}_j}{\sum_{j=1}^{m} p_j}$$

und Anwendung einer Kalibrierfunktion erfolgen. Grundsätzlich könnte eine Bestimmung der axialen Lage des anregbaren Fluorophors auch durchgeführt werden, indem an den Verlauf der gemessenen Intensität ein effektives axiales Intensitätsprofil 45 angepasst wird. Dabei besteht aber einerseits unter anderem das Problem, dass die Form des effektiven axialen Intensitätsprofils vom radialen Abstand zum zentralen lokalen Minimum der gesamten effektiven Intensitätsverteilung 44 des 3D-Anregungsdonuts 8 abhängt, zum anderen ist eine derartige Bestimmung der Lage grundsätzlich rechenaufwendiger und damit zeitaufwendiger.

Die Verfahren zur axialen Vorlokalisation 18 können auch vorteilhaft in Verbindung mit einer folgenden MINFLUX-Lokalisation in zwei Dimensionen angewendet werden. Hierbei hat sich gezeigt, dass mit einem 3D-Anregungsdonut 8 vergleichbar gute Ergebnisse erzielt werden können wie mit einem 2D-Anregungsdonut. Dies ist wichtig, da so auf eine komplexe Einrichtung, die eine schnelle Umschaltung zwischen verschiedenen Anregungs-Intensitätsverteilungen ermöglicht, verzichtet werden kann. Zudem weist ein 3D-Anregungsdonut, sofern die axiale Lage des Fluorophors hinreichend gut bekannt ist, in der Regel einen größeren lateralen Fangbereich für eine MINFLUX-Lokalisation auf als ein 2D-Anregungsdonut.

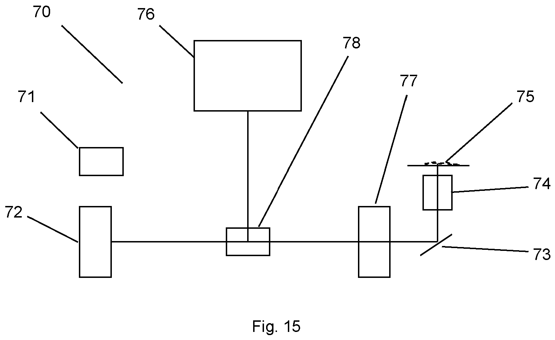

In **Fig. 15** ist schematisch eine Ausführungsform eines erfindungsgemäßen Mikroskops 70 dargestellt. Das Mikroskop 70 weist eine Anregungslichteinheit 76 auf, die eine Lichtquelle und strahlformende Elemente enthält, derart, dass das Anregungslicht in einer Probe 75 einen 3D-Anregungsdonut 8 ausbildet. Die strahlformenden Elemente können einstellbar sein, sodass ermöglicht ist, dass in der Probe 75 ein Anregungsfokus mit einem zentralen Maximum ausgebildet wird. Weiter kann die Anregungslichteinheit 76 eine Ablenkeinheit aufweisen, die eingerichtet ist, den 3D-Anregungsdonut 8 oder allgemeiner den Anregungsfokus insbesondere lateral schnell in der Probe zu verlagern, das heißt, beispielsweise um sequenziell laterale Probepositionen 31,31',31" anzusteuern. Das Mikroskop 70 weist ferner ein Element auf, mit welchem Anregungslicht in einen für Anregung und Detektion gemeinsamen Strahlengang eingekoppelt wird und das von der Probe 75 emittiertes Fluoreszenzlicht in Richtung auf eine Detektionseinheit 72 leitet. Beispielhaft ist in der Figur das Element als dichroitisches Element 78 ausgebildet. Weiter weist das Mikroskop 70 einen verformbaren Spiegel 73 auf. Dieser ist hier zwischen einer Scaneinheit 77 und einem Objektiv 74 platziert. Er ist derart platziert und eingerichtet, dass durch eine Verformung des verformbaren Spiegels 73 der Anregungsfokus, insbesondere der 3D-Anregungsdonut in axialer Richtung in der Probe 75 verlagert werden kann. Die Scaneinheit 77 kann beispielsweise einen Galvo-Scanner umfassen; sie ist ausgebildet, um den Anregungsfokus in lateraler Richtung in der Probe 75 zu verlagern. Die Detektionseinheit 72 kann in einer Ebene, in die mittels des Objektivs 74 und weiterer optischer Elemente, die in der Figur nicht dargestellt sind, der Anregungsfokus abgebildet wird, eine Lochblende oder beispielsweise ein Array von Photonen zählenden Avalanche-Dioden enthalten. Sowohl die Scaneinheit 77 als auch der verformbare Spiegel 73 sind derart platziert, dass sie auf das Anregungslicht und das zu detektierende Fluoreszenzlicht wirken. Mittels der Scaneinheit 77 kann daher in einer Bildebene ein zu einem festen Ort in der Probe 75 konfokal gelegener Punkt in der Bildebene verlagert werden, beispielsweise auf einer Kreisbahn um ein Zentrum. Weist die Anregungslichteinheit 76 eine Ablenkeinheit auf, so kann im Zusammenwirken dieser Ablenkeinheit und der Scaneinheit 77 ein Anregungsfokus in der Probe 75 ortsfest gehalten werden, während mittels der Scaneinheit 77 das Bild des Ortes des Anregungsfokus in einer Bildebene relativ beispielsweise zu einer Lochblende verlagert werden kann. Weiter weist das Mikroskop 70 eine Steuereinheit 71 auf, die eingerichtet ist, das Mikroskop 70 so zu steuern, dass ein erfindungsgemäßes Verfahren durchgeführt wird. Die Steuereinheit 71 kann über Steuerleitungen (nicht dargestellt) mit anzusteuernden Elementen verbunden sein oder auch drahtlos, beispielsweise über Funk.

## BEZUGSZEICHENLISTE

| | |
|---|---|
| 1 | Auffinden eines Fluorophors |
| 2 | Gauß'sche Aktivierungsintensitätsverteilung |
| 3 | Gauß'sche Anregungsintensitätsverteilung |
| 4 | anregbares Fluorophor |
| 5 | erste Ortsrichtung |
| 6 | zweite Ortsrichtung |
| 7 | axiale Ortsrichtung |
| 8 | 3D-Anregungsdonut |
| 9 | Abtastmuster |
| 10 | Vorlokalisation |
| 11,11' | laterale Position |
| 12,12' | laterale Position |
| 13 | Lochblenden-Orbit |
| 15,15' | axiale Position |
| 16 | geschätzte Lage |
| 17 | laterale Vorlokalisation |
| 18 | axiale Vorlokalisation |
| 19 | Durchmesser |
| 20,20' | 3D-Lokalisation |
| 21,21' | erste Position |
| 22,22' | zweite Position |

| 23,23' | dritte Position |
| 24,24' | vierte Position |
| 25,25' | zentrale Position |
| 26,26' | sechste Position |
| 27,27' | siebte Position |
| 28,28' | Abstastmuster-Achse |
| 29,29' | Abtastmuster-Ebene |
| 30,30',30" | laterale MINFLUX-Lokalisation |
| 31,31',31" | laterale Probepositionen |
| 32 | 2D-Anregungsdonut |
| 33 | iterative Echtzeit-MINFLUX-Lokalisation |
| 34 | Kreis |
| 40,40',40''' | axiale MINFLUX-Lokalisation |
| 43 | finale Lokalisation |
| 44 | effektive Intensitätsverteilung |
| 45 | axiales Intensitätsprofil |
| 46 | zentrales lokales Minimum |
| 47 | axiale Probeposition |
| 48 | axiale Probeposition |
| 49 | axiale Probeposition |
| 50 | axiale Probeposition |
| 51 | axiale Probeposition |
| 52 | axiale Probeposition |
| 53 | axiale Probeposition |
| 59,59' | axiales Abtastmuster |
| 60 | axialer Abtastbereich |
| 61 | axialer Fangbereich |
| 62 | lateraler Vorlokalisationsbereich |
| 63 | Vorlokalisationsvolumen |
| 64 | Verschiebung |
| 70 | Mikroskop |
| 71 | Steuereinrichtung |
| 72 | Detektionseinheit |
| 73 | verformbarer Spiegel |
| 74 | Objektiv |
| 75 | Probe |
| 76 | Anregungslichteinheit |
| 77 | Scaneinheit |
| 78 | dichroitisches Element |

**Patentansprüche**

1. Verfahren zur hochaufgelösten Bestimmung der Lage eines anregbaren Fluorophors (4) in drei Raumrichtungen in einer Probe durch Abtasten des anregbaren Fluorophors (4) mit einem 3D-Anregungsdonut (8) mit einem zentralen lokalen Minimum (46),

    - wobei in einem axialen Lokalisationsschritt das zentrale lokale Minimum (46) sequenziell an zwei axialen Probepositionen (15,15') auf einer Abtastmuster-Achse (28), die durch eine geschätzte Lage (16) des anregbaren Fluorophors (4) verläuft, platziert wird, wobei das Paar der Probepositionen (15,15') die geschätzte Lage (16) des anregbaren Fluorophors (4) umschließt,

    - wobei in dem axialen Lokalisationsschritt von dem anregbaren Fluorophor (4) zu jeder der axialen Probepositionen (15,15') emittierte Fluoreszenz gemessen und der Messwert der jeweiligen axialen Probeposition (15,15') zugeordnet wird,

    - wobei in dem axialen Lokalisationsschritt aus den den axialen Probepositionen (15,15') zugeordneten Messwerten eine neue Schätzung der axialen Lage des anregbaren Fluorophors (4) bestimmt wird,

    **dadurch gekennzeichnet, dass**

    - in einem auf den axialen Lokalisationsschritt folgenden lateralen Lokalisationsschritt das zentrale lokale Minimum (46) ausschließlich in einer Abtastmuster-Ebene (29), die senkrecht zu der Abtastmuster-Achse

EP 4 278 226 B1

(28) orientiert ist, sequenziell an mindestens drei um eine in einem oder mehreren früher durchgeführten Schritten geschätzte Lage (16) des anregbaren Fluorophors (4) herum angeordneten lateralen Probepositionen (31) platziert wird,
- wobei in dem lateralen Lokalisationsschritt von dem anregbaren Fluorophor (4) zu jeder der lateralen Probepositionen (31) emittierte Fluoreszenz gemessen und der Messwert der jeweiligen lateralen Probeposition (31) zugeordnet wird,
- wobei in dem lateralen Lokalisationsschritt aus den den lateralen Probepositionen (31) zugeordneten Messwerten eine neue Schätzung der lateralen Lage des anregbaren Fluorophors (4) bestimmt wird.

2. Verfahren nach Anspruch 1, **dadurch gekennzeichnet, dass** die Schritte zum Erhalten der geschätzten Lage (16) des anregbaren Fluorophors (4) als einen Schritt eine laterale Vorlokalisation (17) zur Abschätzung einer lateralen Lage des anregbaren Fluorophors (4), die vor dem axialen Lokalisationsschritt und dem lateralen Lokalisationsschritt durchgeführt wird, umfasst, bei der das anregbare Fluorophor (4) mit einem 3D-Anregungsdonut zu Fluoreszenz angeregt wird, und wobei angeregte Fluoreszenz erfasst wird.

3. Verfahren nach Anspruch 2, **dadurch gekennzeichnet, dass** die laterale Lage des anregbaren Fluorophors (4) abgeschätzt wird aus einer in einer Bildebene, die einen zum Anregungsfokus konfokal gelegenen Punkt enthält, ortsaufgelösten Erfassung der Fluoreszenz, insbesondere wobei die ortsaufgelöste Erfassung der Fluoreszenzemission in der Bildebene mit einem Array von Photonen zählenden Avalanche-Dioden erfolgt oder indem der zum Anregungsfokus konfokal gelegene Punkt in der Bildebene relativ zu einer Lochblende verlagert, bevorzugt auf einer Kreisbahn um ein Zentrum verlagert wird, wobei durch die Lochblende hindurchtretende Fluoreszenz mit einem Detektor erfasst und der jeweiligen Lage des konfokal gelegenen Punktes zugeordnet wird.

4. Verfahren nach einem der Ansprüche 1 bis 3, **dadurch gekennzeichnet, dass** die Schritte zum Erhalten der geschätzten Lage (16) des anregbaren Fluorophors (4) als einen Schritt, bei dem die axiale Koordinate der geschätzten Lage bestimmt wird, eine axiale Vorlokalisation (18) umfasst, die vor dem axialen Lokalisationsschritt und dem lateralen Lokalisationsschritt nach einem Verfahren zur axialen Lokalisation eines anregbaren Fluorophors (4) durchgeführt wird, wobei das Verfahren zur axialen Lokalisation durch Abtasten des anregbaren Fluorophors mit fokussiertem Anregungslicht erfolgt, wobei ein axialer Abtastbereich größer ist als 500 nm, insbesondere größer ist als 1000 nm.

5. Verfahren nach Anspruch 4, **dadurch gekennzeichnet, dass** der laterale Lokalisationsschritt erstmalig nach dem Schritt der axialen Vorlokalisation (18) und vor dem erstmaligen Durchführen des axialen Lokalisationsschritts durchgeführt wird.

6. Verfahren nach einem der Ansprüche 1 bis 4, **dadurch gekennzeichnet, dass** der axiale Lokalisationsschritt erstmalig vor einem erstmaligen Durchführen des lateralen Lokalisationsschritts durchgeführt wird.

7. Verfahren nach einem der vorhergehenden Ansprüche, **dadurch gekennzeichnet, dass** mehrere axiale Lokalisationsschritte und/oder mehrere laterale Lokalisationsschritte durchgeführt werden.

8. Verfahren nach Anspruch 7, **dadurch gekennzeichnet, dass** nach einem lateralen Lokalisationsschritt nächstfolgend ein axialer Lokalisationsschritt dann durchgeführt wird, wenn in dem lateralen Lokalisationsschritt eine neue Schätzung der lateralen Lage des anregbaren Fluorophors (4) mit einer vorgegebenen Präzision bestimmt wurde.

9. Verfahren nach Anspruch 7 oder 8, **dadurch gekennzeichnet, dass** mehrere laterale Lokalisationsschritte in unmittelbarer Abfolge durchgeführt werden, wobei aus der geschätzten Lage (16) des anregbaren Fluorophors (4) und der in einem lateralen Lokalisationsschritt erhaltenen neuen Schätzung der lateralen Lage des anregbaren Fluorophors (4) eine neue geschätzte Lage des anregbaren Fluorophors (4) bestimmt wird, die für den jeweils folgenden lateralen Lokalisationsschritt die geschätzte Lage (16) des anregbaren Fluorophors (4) bildet.

10. Verfahren nach Anspruch 7, **dadurch gekennzeichnet, dass** eine alternierende Abfolge von axialen Lokalisationsschritten und lateralen Lokalisationsschritten durchgeführt wird, wobei jeweils aus der geschätzten Lage (16) des anregbaren Fluorophors (4) und der in einem Schritt erhaltenen neuen Schätzung der axialen Lage oder der lateralen Lage des anregbaren Fluorophors (4) eine neue geschätzte Lage (16) des anregbaren Fluorophors (4) bestimmt wird, die für den jeweils folgenden Schritt die geschätzte Lage (16) des anregbaren Fluorophors (4) bildet.

11. Verfahren nach einem der Ansprüche 7 bis 10, **dadurch gekennzeichnet, dass** das Paar der Probepositionen

23

(15,15') die geschätzte Lage (16) des anregbaren Fluorophors (4) in einem späteren axialen Lokalisationsschritt dichter umschließt als in einem früheren axialen Lokalisationsschritt und/oder dass in einem späteren lateralen Lokalisationsschritt das zentrale lokale Minimum (46) an lateralen Probepositionen (31), die dichter um die geschätzte Lage (16) des anregbaren Fluorophors (4) herum angeordnet sind als in einem früheren lateralen Lokalisationsschritt, platziert wird.

12. Verfahren nach einem der vorhergehenden Ansprüche, **dadurch gekennzeichnet, dass** eine Positionierung des 3D-Anregungsdonuts (8) an einer axialen Position für das sequenzielle Platzieren an die zwei axialen Probepositionen (15,15') und/oder für das Einstellen der Abtastmuster-Ebene (29) und/oder für ein Abtasten bei der axialen Lokalisation und/oder der axialen Vorlokalisation (18) und/oder dass eine Positionierung des fokussierten Anregungslichts für ein Abtasten bei der axialen Lokalisation erfolgt, indem ein Anregungslicht über einen verformbaren Spiegel durch ein Objektiv in die Probe geleitet wird, wobei durch eine Änderung der Form des verformbaren Spiegels die axiale Positionierung erfolgt.

13. Verfahren nach einem der der vorhergehenden Ansprüche, **dadurch gekennzeichnet, dass** die neue Schätzung der axialen Lage des anregbaren Fluorophors (4) und/oder die neue Schätzung der lateralen Lage des anregbaren Fluorophors (4) durch das Auswerten einer Vektorsumme erhalten wird und/oder dass ein Bestimmen der axialen Koordinate der geschätzten Lage bei der axialen Vorlokalisation (18) und/oder dass die axiale Lokalisation durch ein

$$\vec{u}(p_j, \vec{b}_j) = \frac{\sum_{j=1}^{m} p_j \cdot \vec{b}_j}{\sum_{j=1}^{m} p_j}$$

Auswerten einer Vektorsumme erfolgt, insbesondere wobei die Vektorsumme die Form hat, wobei die $p_j$ Photonenanzahlen oder Intensitäten repräsentieren, die zu Positionen $\vec{b}_j$ des 3D-Anregungsdonuts (8) oder des fokussierten Anregungslichts detektiert wurden, wobei der Wert der Vektorsumme entsprechend einer vorbestimmten Kalibrierfunktion korrigiert wird, um die neue Schätzung der axialen Lage oder die neue Schätzung der lateralen Lage oder bei der axialen Vorlokalisation (18) die axiale Koordinate der geschätzten Lage oder die axiale Lokalisation zu erhalten, weiter insbesondere wobei bei dem Auswerten der Vektorsumme die Menge des Hintergrundsignals berücksichtigt wird, wobei die Menge des Hintergrundsignals gleitend aus Messdaten bestimmt wird.

14. Verfahren nach einem der vorangehenden Ansprüche, **dadurch gekennzeichnet, dass** es in Echtzeit durchgeführt wird.

15. Mikroskop, **dadurch gekennzeichnet, dass** es eine Steuereinrichtung aufweist, die eingerichtet ist, das Mikroskop so zu steuern, dass ein Verfahren nach einem der Ansprüche 1 bis 14 durchgeführt wird, insbesondere wobei das Mikroskop einen verformbaren Spiegel zur axialen Verlagerung eines Anregungsfokus in einer Probe aufweist.

**Claims**

1. Method for high-resolution determination of the position of an excitable fluorophore (4) in three spatial directions in a sample by scanning the excitable fluorophore (4) with a 3D excitation donut (8) having a central local minimum (46),

- wherein, in an axial localisation step, the central local minimum (46) is sequentially placed at two axial sample positions (15,15') on a scan pattern axis (28) passing through an estimated location (16) of the excitable fluorophore (4), the pair of sample positions (15,15') enclosing the estimated location (16) of the excitable fluorophore (4),
- wherein in the axial localisation step, fluorescence emitted by the excitable fluorophore (4) is measured at each of the axial sample positions (15, 15') and the measured value is assigned to the respective axial sample position (15, 15'),
- wherein in the axial localisation step, a new estimate of the axial position of the excitable fluorophore (4) is determined from the measured values assigned to the axial sample positions (15, 15'),
**characterised in that**
- in a lateral localisation step following the axial localisation step, the central local minimum (46) is placed exclusively in a scan pattern plane (29) oriented perpendicular to the scan pattern axis (28) sequentially at at least three lateral sample positions (31) arranged around a estimated position (16) of the excitable fluorophore (4) estimated in one or more steps performed earlier,
- wherein in the lateral localisation step, fluorescence emitted by the excitable fluorophore (4) is measured at each of the lateral sample positions (31) and the measured value is assigned to the respective lateral sample position (31),

- wherein in the lateral localisation step, a new estimate of the lateral position of the excitable fluorophore (4) is determined from the measured values assigned to the lateral sample positions (31).

2. The method according to claim 1, **characterised in that** the steps for obtaining the estimated position (16) of the excitable fluorophore (4) comprises as a step a lateral pre-localisation (17) for estimating a lateral position of the excitable fluorophore (4), which is performed prior to the axial localisation step and the lateral localisation step, wherein the excitable fluorophore (4) is excited to fluorescence with a 3D excitation donut, and wherein excited fluorescence is detected.

3. Method according to claim 2, **characterised in that** the lateral position of the excitable fluorophore (4) is estimated from a spatially resolved detection of the fluorescence in an image plane which contains a point confocal to the excitation focus, in particular wherein the spatially resolved detection of the fluorescence emission in the image plane is carried out with an array of photon-counting avalanche diodes or by displacing the point in the image plane which is confocal to the excitation focus relative to a pinhole aperture, preferably on a circular path around a centre, wherein fluorescence passing through the pinhole aperture is detected with a detector and assigned to the respective position of the confocal point.

4. The method according to any one of claims 1 to 3, **characterised in that** the steps for obtaining the estimated position (16) of the excitable fluorophore (4) comprises an axial pre-localisation (18) as a step in which the axial coordinate of the estimated position is determined, which is carried out before the axial localisation step and the lateral localisation step according to a method for the axial localisation of an excitable fluorophore (4), the method for axial localisation being carried out by scanning the excitable fluorophore with focused excitation light, an axial scanning range being greater than 500 nm, in particular greater than 1000 nm.

5. Method according to claim 4, **characterised in that** the lateral localisation step is carried out for the first time after the axial pre-localisation step (18) and before the axial localisation step is carried out for the first time.

6. Method according to one of claims 1 to 4, **characterised in that** the axial localisation step is carried out for the first time before the lateral localisation step is carried out for the first time.

7. Method according to one of the preceding claims, **characterised in that** several axial localisation steps and/or several lateral localisation steps are carried out.

8. Method according to claim 7, **characterised in that**, after a lateral localisation step, an axial localisation step is carried out next if a new estimate of the lateral position of the excitable fluorophore (4) was determined with a predetermined precision in the lateral localisation step.

9. Method according to claim 7 or 8, **characterised in that** a plurality of lateral localisation steps are carried out in direct succession, wherein a new estimated position of the excitable fluorophore (4) is determined from the estimated position (16) of the excitable fluorophore (4) and the new estimate of the lateral position of the excitable fluorophore (4) obtained in a lateral localisation step, which forms the estimated position (16) of the excitable fluorophore (4) for the respective following lateral localisation step.

10. Method according to claim 7, **characterised in that** an alternating sequence of axial localisation steps and lateral localisation steps is carried out, wherein in each case a new estimated position (16) of the excitable fluorophore (4) is determined from the estimated position (16) of the excitable fluorophore (4) and the new estimate of the axial position or the lateral position of the excitable fluorophore (4) obtained in one step, which new estimated position (16) forms the estimated position (16) of the excitable fluorophore (4) for the respective following step.

11. The method according to any one of claims 7 to 10, **characterised in that** the pair of sample positions (15, 15') surrounds the estimated position (16) of the excitable fluorophore (4) more closely in a later axial localisation step than in an earlier axial localisation step and/or in that in a later lateral localisation step the central local minimum (46) is placed at lateral sample positions (31) which are arranged more closely around the estimated position (16) of the excitable fluorophore (4) than in an earlier lateral localisation step.

12. Method according to one of the preceding claims, **characterised in that** a positioning of the 3D excitation donut (8) at an axial position for the sequential placement at the two axial sample positions (15,15') and/or for setting the scan pattern plane (29) and/or for scanning at the axial localisation and/or the axial pre-localisation (18) and/or **in that** positioning of the focused excitation light for scanning at the axial localisation is performed by directing an excitation light via a deformable mirror through an objective into the sample, wherein the axial positioning being performed by changing the shape of the deformable mirror.

13. Method according to one of the preceding claims, **characterised in that** the new estimate of the axial position of the excitable fluorophore (4) and/or the new estimate of the lateral position of the excitable fluorophore (4) is obtained by evaluating a vector sum and/or **in that** a determination of the axial coordinate of the estimated position in the axial pre-localisation (18) and/or **in that** the axial localisation is performed by evaluating a vector sum, in particular wherein the

$$\vec{u}(p_j, \vec{b}_j) = \frac{\sum_{j=1}^{m} p_j \cdot \vec{b}_j}{\sum_{j=1}^{m} p_j}$$

vector sum has the form , wherein the $p_j$ represent photon counts or intensities, which were detected at positions $\vec{b}_j$ of the 3D excitation donut (8) or the focussed excitation light, wherein the value of the vector sum is corrected according to a predetermined calibration function, in order to obtain the new estimate of the axial position or the new estimate of the lateral position or, in the case of the axial pre-localisation (18), the axial coordinate of the estimated position or the axial localisation, furthermore, in particular, the quantity of the background signal being taken into account when evaluating the vector sum, the quantity of the background signal being determined on a sliding basis from measurement data.

14. Method according to one of the preceding claims, **characterised in that** it is carried out in real time.

15. Microscope, **characterised in that** it has a control device which is set up to control the microscope so that a method according to one of claims 1 to 14 is carried out, in particular wherein the microscope has a deformable mirror for axial displacement of an excitation focus in a sample.

**Revendications**

1. Procédé de détermination à haute résolution de la position d'un fluorophore excitable (4) dans trois directions spatiales dans un échantillon par balayage du fluorophore excitable (4) avec un 3D-donut d'excitation (8) ayant un minimum local central (46),

   - dans lequel, dans une étape de localisation axiale, le minimum local central (46) est placé séquentiellement à deux positions d'échantillon axiales (15, 15') sur un axe de motif de balayage (28) passant par un emplacement estimé (16) du fluorophore excitable (4), la paire de positions d'échantillon (15, 15') entourant l'emplacement estimé (16) du fluorophore excitable (4),

     - - dans lequel, dans l'étape de localisation axiale, la fluorescence émise par le fluorophore excitable (4) à chacune des positions axiales d'échantillon (15, 15') est respectivement mesurée et la valeur mesurée est associée à la position axiale d'échantillon respective (15, 15'),

   - dans lequel, dans l'étape de localisation axiale, une nouvelle estimation de la position axiale du fluorophore excitable (4) est déterminée à partir des valeurs de mesure associées aux positions axiales de l'échantillon (15, 15'),
   **caractérisé en ce que**
   - dans une étape de localisation latérale suivant l'étape de localisation axiale, le minimum local central (46) est placé séquentiellement, exclusivement dans un plan de motif de balayage (29) orienté perpendiculairement à l'axe de motif de balayage (28), en au moins trois positions d'échantillon latérales (31) disposées autour d'une position (16) du fluorophore excitable (4) estimée dans une ou plusieurs étapes réalisées précédemment,
   - dans lequel, dans l'étape de localisation latérale, la fluorescence émise par le fluorophore excitable (4) vers chacune des positions d'échantillon latérales (31) est mesurée et la valeur mesurée est associée à la position d'échantillon latérale respective (31),
   - dans lequel, dans l'étape de localisation latérale, une nouvelle estimation de la position latérale du fluorophore excitable (4) est déterminée à partir des valeurs de mesure associées aux positions latérales de l'échantillon (31).

2. Procédé selon la revendication 1, **caractérisé en ce que** les étapes d'obtention de la position estimée (16) du fluorophore excitable (4) comprennent, en tant qu'étape, une pré-localisation latérale (17) pour estimer une position latérale du fluorophore excitable (4), qui est effectuée avant l'étape de localisation axiale et l'étape de localisation latérale, dans laquelle le fluorophore excitable (4) est excité en fluorescence avec un 3D-donut d'excitation , et dans lequel la fluorescence excitée est détectée.

3. Procédé selon la revendication 2, **caractérisé en ce que** la position latérale du fluorophore excitable (4) est estimée à partir d'une détection de fluorescence résolue localement dans un plan image contenant un point situé de manière confocale par rapport au foyer d'excitation, en particulier la détection à résolution spatiale de l'émission de fluorescence dans le plan d'image s'effectuant avec un réseau de diodes à avalanche comptant des photons ou en déplaçant le point situé de manière confocale par rapport au foyer d'excitation dans le plan d'image par rapport à un diaphragme à trous, de préférence en le déplaçant sur une trajectoire circulaire autour d'un centre, la fluorescence traversant le diaphragme à trous étant détectée par un détecteur et associée à la position respective du point situé de manière confocale.

4. Procédé selon l'une des revendications 1 à 3, **caractérisé en ce que** les étapes d'obtention de la position estimée (16) du fluorophore excitable (4) comprennent, en tant qu'étape au cours de laquelle la coordonnée axiale de la position estimée est déterminée, une pré-localisation axiale (18), qui est effectuée avant l'étape de localisation axiale et l'étape de localisation latérale selon un procédé de localisation axiale d'un fluorophore excitable (4), le procédé de localisation axiale étant effectué par balayage du fluorophore excitable avec une lumière d'excitation focalisée, dans lequel une plage de balayage axial est supérieure à 500 nm, en particulier supérieure à 1000 nm.

5. Procédé selon la revendication 4, **caractérisé en ce que** l'étape de localisation latérale est réalisée pour la première fois après l'étape de pré-localisation axiale (18) et avant la réalisation pour la première fois de l'étape de localisation axiale.

6. Procédé selon l'une quelconque des revendications 1 à 4, **caractérisé en ce que** l'étape de localisation axiale est effectuée pour la première fois avant une première exécution de l'étape de localisation latérale.

7. Procédé selon l'une des revendications précédentes, **caractérisé en ce que** plusieurs étapes de localisation axiale et/ou plusieurs étapes de localisation latérale sont effectuées.

8. Procédé selon la revendication 7, **caractérisé en ce qu'**après une étape de localisation latérale, une étape de localisation axiale directement suivante est effectuée si une nouvelle estimation de la position latérale du fluorophore excitable (4) a été déterminée avec une précision prédéterminée dans l'étape de localisation latérale.

9. Procédé selon la revendication 7 ou 8, **caractérisé en ce que** plusieurs étapes de localisation latérale sont effectuées en succession directe, une nouvelle position estimée du fluorophore excitable (4) étant déterminée à partir de la position estimée (16) du fluorophore excitable (4) et de la nouvelle estimation de la position latérale du fluorophore excitable (4) obtenue dans une étape de localisation latérale, qui forme la position estimée (16) du fluorophore excitable (4) pour l'étape de localisation latérale respectivement suivante.

10. Procédé selon la revendication 7, **caractérisé en ce qu'**on effectue une succession alternée d'étapes de localisation axiale et d'étapes de localisation latérale, une nouvelle position estimée (16) du fluorophore excitable (4) étant déterminée à chaque fois à partir de la position estimée (16) du fluorophore excitable (4) et de la nouvelle estimation de la position axiale ou de la position latérale du fluorophore excitable (4) obtenue dans une étape, laquelle position estimée (16) constitue la position estimée (16) du fluorophore excitable (4) pour l'étape suivante respective.

11. Procédé selon l'une quelconque des revendications 7 à 10, **caractérisé en ce que** la paire de positions d'échantillon (15, 15') entoure la position estimée (16) du fluorophore excitable (4) de manière plus proche lors d'une étape de localisation axiale ultérieure que lors d'une étape de localisation axiale antérieure et/ou **en ce que**, lors d'une étape de localisation latérale ultérieure, le minimum local central (46) est placé à des positions d'échantillon latérales (31) qui sont plus proches autour de la position estimée (16) du fluorophore excitable (4) que lors d'une étape de localisation latérale antérieure.

12. Procédé selon l'une quelconque des revendications précédentes, **caractérisé en ce qu'**un positionnement du 3D-donut d'excitation (8) à une position axiale est prévu pour un placement séquentiel aux deux positions axiales d'échantillon (15,15') et/ou pour le réglage du plan du motif de balayage (29) et/ou pour un balayage lors de la localisation axiale et/ou de la pré-localisation axiale (18) et/ou **en ce qu'**un positionnement de la lumière d'excitation focalisée pour un balayage lors de la localisation axiale est effectué en dirigeant une lumière d'excitation dans l'échantillon via un miroir déformable à travers un objectif, le positionnement axial étant effectué par une modification de la forme du miroir déformable.

**13.** Procédé selon l'une quelconque des revendications précédentes, **caractérisé en ce que** la nouvelle estimation de la position axiale du fluorophore excitable (4) et/ou la nouvelle estimation de la position latérale du fluorophore excitable (4) est obtenue par l'évaluation d'une somme vectorielle et/ou **en ce qu'**une détermination de la coordonnée axiale de la position estimée lors de la pré-localisation axiale (18) et/ou **en ce que** la localisation axiale est réalisée par une

$$\vec{u}\big(p_j, \vec{b}_j\big) = \frac{\sum_{j=1}^{m} p_j \cdot \vec{b}_j}{\sum_{j=1}^{m} p_j},$$

évaluation d'une somme vectorielle, en particulier, la somme vectorielle ayant la forme lesp; représentant des nombres de photons ou des intensités, détectés à des positions $\vec{b}_j$ du donut d'excitation 3D (8) ou de la lumière d'excitation focalisée, la valeur de la somme vectorielle étant corrigée selon une fonction d'étalonnage prédéterminée, pour obtenir la nouvelle estimation de la position axiale ou la nouvelle estimation de la position latérale ou, dans le cas de la pré-localisation axiale (18), la coordonnée axiale de la position estimée ou la localisation axiale, en outre en particulier dans lequel, lors de l'évaluation de la somme vectorielle, la quantité du signal d'arrière-plan est prise en compte, la quantité du signal d'arrière-plan étant déterminée de manière glissante à partir de données de mesure.

**14.** Procédé selon l'une des revendications précédentes, **caractérisé en ce qu'**il est réalisé en temps réel.

**15.** Microscope, **caractérisé en ce qu'**il comporte un dispositif de commande agencé pour commander le microscope de manière à mettre en oeuvre un procédé selon l'une des revendications 1 à 14, notamment dans lequel le microscope comporte un miroir déformable pour déplacer axialement un foyer d'excitation dans un échantillon.

Fig. 1
(Stand der Technik)

Fig. 2

(Stand der Technik)

EP 4 278 226 B1

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011055367 B4
- EP 3055674 B1
- DE 102013114860 B3
- WO 2018069283 A1
- US 20190235220 A1
- US 20190234882 A1
- US 20190234879 A1
- WO 2020128106 A1
- US 20200393378 A1
- EP 3951470 A1

**In der Beschreibung aufgeführte Nicht-Patentliteratur**

- **FRANCISCO BALZAROTTI**. Nanometer resolution imaging and tracking of fluorescent molecules with minimal photon fluxes. *arXiv:1611.03401*, 2016
- **KLAUS C. GWOSCH**. MINFLUX nanoscopy delivers 3D multicolor nanometer resolution in cells. *Nat Methods*, 2020, vol. 17, 217-224, https://doi.orq/10.1038/s41592-019-0688-0
- **JASMIN K. PAPE et al.** Multicolor 3D MINFLUX nanoscopy of mitochondrial MICOS proteins. *PNAS*, 25 August 2020, vol. 117 (34), 20607-20614, https://doi.org/ 10.1073/pnas.2009364117
- **C-L. CHIU** ; **E. GRATTON**. Axial Super Resolution Topography of Focal Adhesion by Confocal Micros-copy. *Microsc Res Tech*, 2013, vol. 76 (10), 1-16